# EUROPEAN PATENT APPLICATION

(11) **EP 4 579 443 A1**
(43) Date of publication of application: **02.07.2025**
(21) Application number: 24210012.1
(22) Date of filing: 31.10.2024
(51) Int. Cl.: G06F 9/30, G06F 9/46

(54) **PROCESSORS, METHODS, SYSTEMS, AND INSTRUCTIONS TO SAVE AND RESTORE PROTECTED EXECUTION ENVIRONMENT CONTEXT**

(30) Priority: 29.12.2023 US 202318401128
(71) Applicant: INTEL Corporation, Santa Clara, CA 95054 (US)
(72) Inventor: Constable, Scott, Portland OR, 97229 (US); Xing, Bin, Hillsboro OR, 97124 (US); Vij, Mona, Portland OR, 97124 (US); Liu, Fangfei, Hillsboro OR, 97124 (US); Kuvaiskii, Dmitrii, 82024 Taufkirchen BY (DE)
(74) Representative: Samson & Partner Patentanwälte mbB

(57) **Abstract**

An apparatus of an aspect includes a context storage to store context of a logical processor, and an execution unit coupled with the context storage. The execution unit to perform operations corresponding to a control primitive or an exceptional condition. The operations including to selectively save a first subset of the context, from a first subset of the context storage written to after entrance into a protected execution environment, to system memory, and cause the logical processor to exit the protected execution environment. Other apparatus, methods, systems, and instructions are disclosed.

## Description

### BACKGROUND

### Technical Field

Embodiments described herein generally relate to processors. In particular, embodiments described herein generally relate to saving and restoring context of processors.

### Background Information

During use, processors generate and maintain execution state or context while executing threads. The context may include the data or values stored in the architectural registers of the processor. This context generally needs to be saved and restored when switching between threads. For example, when an outgoing thread is switched out, the outgoing thread's context may be saved from the architectural registers of the processor to system memory. Similarly, when an incoming thread is switched in, the incoming thread's context may be restored from system memory into the architectural registers of the processor.

### BRIEF DESCRIPTION OF THE DRAWINGS

Various examples in accordance with the present disclosure will be described with reference to the drawings, in which:
FIG. 1 is a block diagram of a computer system in which embodiments of the invention may be implemented.
FIG. 2 is a block diagram of a first example embodiment in which context element metadata is stored alongside corresponding context elements.
FIG. 3 is a block diagram of a second example embodiment in which a register is used to store context element metadata from corresponding context elements.
FIG. 4 is a block diagram of a first example embodiment in which context element metadata is defined at register granularity.
FIG. 5 is a block diagram of a second example embodiment in which context element metadata is defined at a register set granularity.
FIG. 6 is a block flow diagram of an embodiment of a method of entering into a protected execution environment.
FIG. 7 is a block diagram of an embodiment of an apparatus that is operative to perform an embodiment of a control primitive to exit a protected execution environment or exit the protected execution environment asynchronously due to an exceptional condition.
FIG. 8 is a block diagram of an embodiment of a processor that is operative to perform an embodiment of an instruction to exit a protected execution environment.
FIG. 9 is a block diagram of an embodiment of an apparatus that is operative to perform an embodiment of a command to exit a protected execution environment.
FIG. 10 is a block flow diagram of an embodiment of a method of exiting a protected execution environment.
FIG. 11 is a block diagram of an embodiment of a processor that is operative to perform an embodiment of a context access instruction.
FIG. 12 is a block flow diagram of an embodiment of a method of lazily restoring a context element, and committing an operation that reads the context element.
FIG. 13 is a block flow diagram of an embodiment of a method of committing an operation that writes a context element.
FIG. 14 is a block flow diagram of an embodiment of a method of lazily restoring a context element, and committing an operation that reads and then writes the context element.
FIG. 15 illustrates an example computing system.
FIG. 16 illustrates a block diagram of an example processor and/or System on a Chip (SoC) that may have one or more cores and an integrated memory controller.
FIG. 17(A) is a block diagram illustrating both an example in-order pipeline and an example register renaming, out-of-order issue/execution pipeline according to examples.
FIG. 17(B) is a block diagram illustrating both an example in-order architecture core and an example register renaming, out-of-order issue/execution architecture core to be included in a processor according to examples.
FIG. 18 illustrates examples of execution unit(s) circuitry.
FIG. 19 is a block diagram of a register architecture according to some examples.
FIG. 20 illustrates examples of an instruction format.
FIG. 21 illustrates examples of an addressing information field.
FIG. 22 illustrates examples of a first prefix.
FIGS. 23(A)-(D) illustrate examples of how the R, X, and B fields of the first prefix in FIG. 22 are used.
FIGS. 24(A)-(B) illustrate examples of a second prefix.
FIG. 25 illustrates examples of a third prefix.
FIG. 26 is a block diagram illustrating the use of a software instruction converter to convert binary instructions in a source instruction set architecture to binary instructions in a target instruction set architecture according to examples.

### DETAILED DESCRIPTION OF EMBODIMENTS

The present disclosure relates to methods, apparatus, systems, instructions, and non-transitory computer-readable storage media to save and restore context for protected execution environments. In the following description, numerous specific details are set forth (e.g., specific methods, operations, instructions, processor configurations, microarchitectural details, etc.). However, embodiments may be practiced without these specific details. In other instances, well-known circuits, structures and techniques have not been shown in detail to avoid obscuring the understanding of the description.

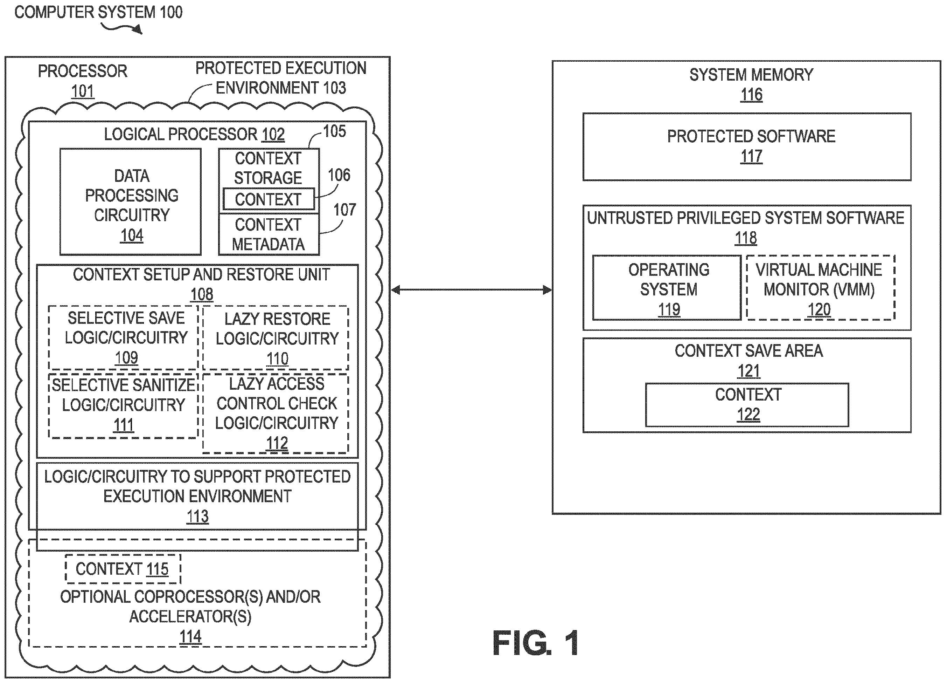

FIG. 1 is a block diagram of a computer system 100 in which embodiments of the invention may be implemented. In various embodiments, the computer system may represent a server, a workstation, a desktop computer, a laptop computer, a notebook computer, a tablet computer, a smartphone, a set-top box, a network device (e.g., a router, switch, etc.), or various other types of computer systems known in the art.

The computer system includes a processor 101 and a system memory 116. The processor and the system memory are coupled with one another (e.g., through one or more interconnects, memory controllers, chipset components, etc.). The computer system is shown and described in order to better illustrate certain concepts, but it is to be appreciated that other embodiments pertain to the processor alone without the system memory.

The system memory 116 may include one or more types of memory. Examples of suitable types of memory include, but are not limited to, random access memory (RAM) such as dynamic random access memory (DRAM), non-volatile memory such as erasable programmable read-only memory (EPROM), electrically erasable programmable read-only memory (EEPROM), other types of read-only memory (ROM), and flash memory, persistent memory, other types of memory known in the art, and combinations thereof.

In some embodiments, the processor may be a general-purpose processor (e.g., a general-purpose microprocessor or central processing unit (CPU) of the type used in desktops, laptops, servers, and other computer systems). In other embodiments, the processor may be a special-purpose processor. Examples of suitable special-purpose processors include, but are not limited to, co-processors, graphics processors (e.g., general-purpose GPUs), security processors, machine-learning processors, artificial intelligence processors, network processors, and controllers (e.g., microcontrollers).

When in use, a protected software 117 and an untrusted privileged system software 118 may be stored in the system memory. The protected software may broadly represent software that is to be protected from untrusted software (e.g., the untrusted privileged system software). The untrusted privileged system software may broadly represent privileged system software that is untrusted by the protected software. By way of example, the untrusted privileged system software may be untrusted because there is a chance that it could become corrupted and then use its privileges to misbehave, such as, for example, to steal secret information (e.g., passwords, cryptographic keys, confidential data, etc.), falsely authenticate itself as or otherwise impersonate the protected software, etc.), etc. In some embodiments, the untrusted privileged system software may be outside of a Trusted Computing Base (TCB) of the protected software.

Typically, the untrusted privileged system software may include at least one operating system 119 (e.g., a standard operating system (OS), real-time OS, a highly stripped-down operating environment with limited conventional OS functionality). In some cases, the untrusted privileged system software may also include at least one virtual-machine monitor (VMM) 120. The VMM is sometimes also referred to as a hypervisor. The VMM may present or expose to other software (e.g., referred to as "guest" software) the abstraction of one or more virtual machines (VMs). The VMM may emulate or otherwise provide a bare machine interface to the VMs. The VMM may help to manage the VMs (e.g., manage resource allocation for the VMs). In some embodiments, a VM may include a guest OS and the protected software. In some cases, the untrusted privileged system software may optionally include multiple VMMs (e.g., nested VMMs). The VMM is used with some types, but not all possible types, of the protected software.

The processor may support or provide a protected execution environment 103. The protected execution environment may help to allow the protected software 117 to execute in a way that is protected from untrusted software (e.g., the untrusted privileged system software 118). In various embodiments, the protected execution environment may be a trusted execution environment (TEE), an isolated execution environment (IEE), a hardware-isolated virtual machine (VM), a secure VM, a protected VM execution space, a protected container, or the like. The protected execution environment may use various approaches to prevent unauthorized access and/or modification of code and data while the code and data is in use (e.g., even from the untrusted privileged system software). For example, the protected execution environment may provide one or more of data confidentiality (e.g., in which the untrusted privileged system software and other unauthorized entities are not permitted to view data while it is in use within the protected execution environment), data integrity (e.g., in which the untrusted privileged system software and other unauthorized entities are not permitted to add, remove, or alter data while it is in use within the protected execution environment), and code integrity (e.g., in which the untrusted privileged system software and other unauthorized entities are not permitted to add, remove, or alter code executing within the protected execution environment). In some embodiments, the protected execution environment may optionally provide one or more of data replay protection, memory re-mapping protection, and the like. Depending upon the particular type of protected execution environment, the protection may be provided at the virtual machine level, individual application level, or compute function level.

To further illustrate certain concepts, a few specific examples of possible protected execution environments, protected software, and untrusted privileged system software will be described. In some embodiments, the protected execution environment and protected software may be that of an Intel^{®} Software Guard Extensions (Intel^{®} SGX) secure enclave. The secure enclave may represent a protected container. The secure enclave may represent code and data in a protected memory area in the address space of a program in which only code within that protected memory area can access the code and data within that protected memory area. Code outside of that protected memory area (e.g., the untrusted privileged system software) cannot access the code and data within that protected memory area. The secure enclave can be used either with or without the VMM. The code and data of the secure enclave may be encrypted and integrity protected by a cryptographic unit of the processor when resident outside of the processor and only the processor may know the encryption key. This may help to protect the secure enclave even in the presence the untrusted privileged system software.

In other embodiments, the protected execution environment and protected software may be that of an Intel^{®} Trust Domain Extensions (Intel^{®} TDX) trust domain (TD). The TD may represent a hardware-isolated VM. The TD may be hardware-isolated from the VMM and other non-TD software. The TD may use a protection management module known as a TDX module that can be run in a Secure Arbitration Mode (SEAM). At a high level, the TDX module may serve as an intermediary between the protected software and the VMM to help manage the security or protection of the protected software from the VMM.

In other embodiments, the protected execution environment and protected software may be that of an ARM realm. The realm may represent a protected execution environment or protected virtual machine that executes in realm security state. The realm may use a protection management module known as a Realm Management Monitor (RMM). At a high level, the RMM module may serve as an intermediary between the protected software and the VMM to help manage the security or protection of the protected software from the VMM.

In other embodiments, the protected execution environment and protected software may be that of an AMD Secure Encrypted Virtualization (SEV) VM. Contents of the SEV VM may be encrypted with cryptographic key of the SEV VM that is kept secret from the VMM when the contents are stored to the system memory.

In still other embodiments, the protected execution environment and protected software may be that of an AMD SEV Secure Nested Paging (SEV-SNP) VM. Like with SEV, the contents of the SEV-SNP VM may be encrypted with cryptographic key of the SEV VM that is kept secret from the VMM when the contents are stored to the system memory. In addition, access to pages of the SEV-SNP VM may be restricted based on ownership, page type, and other attributes maintained in a Reverse Map Table (RMP).

In still other embodiments, the protected execution environment and protected software may be that of Nvidia's Nvidia Confidential Computing. Isolation may be provided at the virtual machine or multi-user GPU instance level.

Referring again to FIG. 1, the processor includes circuitry or other logic 113 to support the protected execution environment. The circuitry/logic 113 may support any of the protected execution environments and/or types of protected software discussed above (e.g., secure enclaves, TDs, SEV VMs, SEV-SNP VMs, etc.). For example, the logic/circuitry may include cryptographic logic/circuitry to encrypt code and data of the protected container before it is transmitted to the system memory and to decrypt the encrypted code and data when it is loaded into the processor, logic/circuitry to mark or tag the decrypted code and data when it is resident in internal structures of the processor and prevent access to it by unauthorized entities, logic/circuitry (e.g., a memory management unit (MMU)) to restrict access to the code and data of the protected software when in system memory, and so on.

Referring again to FIG. 1, the processor includes at least one logical processor 102. The logical processor may also be referred to as a processor element. Examples of suitable logical processors include, but are not limited to, cores, hardware threads, thread units, and thread slots, and other logical processors or processor elements that have a dedicated context (e.g., architectural registers, a program counter or instruction pointer, etc.). The term core is often used to refer to logic located on an integrated circuit that can maintain an independent context, and in which the context is associated with dedicated execution and certain other resources. In contrast, the term hardware thread is often used to refer to logic located on an integrated circuit that can maintain an independent context, and in which the context shares access to execution and certain other resources. When some execution and/or other resources are shared for two or more contexts, and other execution and/or other resources are dedicated to a context, the line between such usage of the terms core and hardware thread may tend to be less distinct. Nevertheless, the cores, hardware threads, thread units, and thread slots, and other logical processors or processor elements, are often viewed by software as individual logical processors or processor elements. Software threads, processes, or workloads may be scheduled on, and independently associated with, each of the cores, hardware threads, thread units, and thread slots, and other logical processors or processor elements.

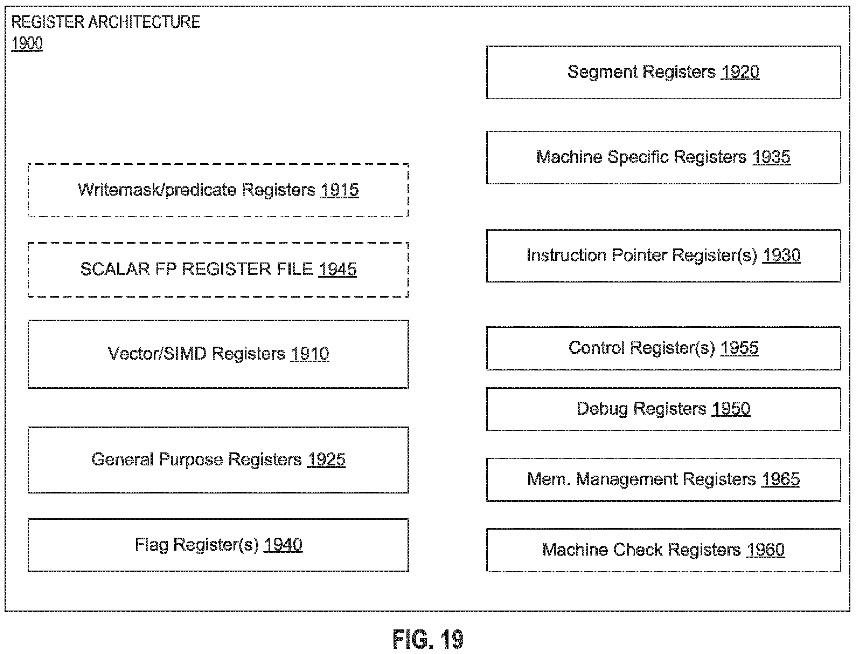

The logical processor includes data processing circuitry 104 such as an instruction processing pipeline (e.g., a decode unit, execution units, etc.). The data processing circuitry may execute software, including the protected software 117, and perform data processing on a context 106. The context may include the execution state and/or the data stored in architectural registers and/or other architectural storage of the logical processor. These architectural registers and/or other architectural storage are shown in the illustration as a context storage 105. Examples of suitable context storage includes, but is not limited to, a set of general-purpose registers, one or more sets of vector registers of one or more vector widths, a set of mask registers, a set of tile registers or other tile storage to store matrix or other two-dimensional data, other types of architectural storage, and various combinations thereof. One specific example of suitable context storage includes the registers shown in FIG. 19. The context may represent the data or values in such context storage. In some embodiments, the processor may optionally include one or more coprocessors and/or accelerators 114 (e.g., a shared matrix processing accelerator, a shared vector execution unit, a shared offload engine, etc.) and the context may optionally also include context 115 of the one or more coprocessors and/or accelerators.

The logical processor includes a context save and restore unit 108. Periodically, the processor may swap at least some of the context 106 between the context storage 105 and the system memory 116 (e.g., a context save area 122 in the system memory). For example, when the logical processor enters the protected execution environment 103, the logical processor may restore or load context 122 from the system memory (e.g., from a context save area 121) into the context storage 105 as the context 106. Similarly, the logical processor may exit the protected execution environment, for example, either synchronously (e.g., to make a system call) or asynchronously (e.g., due to a timer interrupt). When exiting the protected execution environment, the logical processor may save or store the context 106 from the context storage 105 as the context 122 in the system memory 116. Such context saving and restoring may occur when switching threads, upon interrupts, when the untrusted privileged system software needs to handle certain events, and for other reasons.

Saving and restoring the context consumes power and takes time, which may tend to limit performance. This may be especially true when there is a large amount of the context and/or when the context is saved and restored frequently (e.g., when the system is busy and asynchronous exits are frequent and/or when the protected execution environment frequently calls untrusted/unprotected code). Moreover, many modern day processors have a substantial amount of context, such as, for example, as a result of many registers, wide registers (e.g., wide vector registers), tile registers or other tile storage, and so on.

In some embodiments, the context save and restore unit may include selective save circuitry or other logic 109 that is operative to selectively save and/or store a subset of the context 106 from the context storage 105 of the processor to the system memory 116. In some embodiments, the selective save circuitry/logic may selectively save/store a first subset of the context, which has been modified or otherwise written to after entrance into and during execution within the protected execution environment, from the context storage of the processor to the context in the system memory. However, the selective save/circuitry logic may determine not to save/store and may not save/store a second different subset of the context, which has not been modified or otherwise written after entrance into and during the execution within the protected execution environment, from the context storage of the processor to the context in the system memory. For example, context in a first subset of a set of vector registers, which have been written to during execution within the protected execution environment, may be selectively saved/stored to the system memory, but context in a second different subset of the set of vector registers, which have not been written to during the execution within the protected execution environment, may not be saved/stored to the system memory. For example, during a context save operation, context save logic may bypass portions of context storage that have not had context changes since the latest context save operation, and may selectively save context from portions of the context storage that have had context changes since the latest context save operation. Advantageously, saving/storing only a subset of the context to the system memory may tend to help reduce latency and/or improve performance and/or reduce power consumption.

In some embodiments, the context save and restore unit may include selective sanitize circuitry or other logic 111 that is operative to selectively "sanitize" a subset of the context storage 105. While within the protected execution environment 103 the logic/circuitry 113 may help to protect the confidentiality of the context 106. In some embodiments, after exiting the protected execution environment, such protections may not be available and/or there may be a greater risk of an untrusted entity reading the context from the context storage. In some embodiments, the selective sanitize circuitry/logic 111 may be operative to selectively sanitize a first subset of the context storage 105, which has been read from and/or written to after entering into and during execution within the protected execution environment 103, when exiting the protected execution environment. However, the selective sanitize circuitry/logic may determine not to sanitize and may not sanitize a second different subset of the context storage 105, which has not been read from or written to after entering into and during the execution within the protected execution environment 103, when exiting the protected execution environment. Sanitization of the second different subset of the context storage may be elided or avoided. For example, a first subset of a set of vector registers, which have been read from and/or written to after entering into and during execution within the protected execution environment, may be selectively sanitized, but a second different subset of the set of vector registers, which have not been either read from or written to after entering into and during the execution within the protected execution environment, may not be sanitized. The subset of the context storage that has been written to represents the subset of the context storage that contains confidential information so it is that subset of the context storage that may be selectively sanitized. Examples of suitable ways of sanitizing the context storage include, but are not limited to, overwriting the context 106 (e.g., with all zeroes, all ones, a predetermined meaningless value, a predetermined bit pattern, or some other non-confidential value), erasing the context in the context storage, resetting the context storage to a predetermined, default, or reset value, encrypting, scrambling, or otherwise obfuscating the context in the context storage, compromising the context in the context storage in a way that obfuscated the context, wiping the context storage clean, or otherwise altering or changing the context. Advantageously, selectively sanitizing only a subset of the context and/or context storage may tend to help reduce latency and/or improve performance and/or reduce power consumption.

In some embodiments, the context save and restore unit may include lazy restore circuitry or other logic 110 that is operative to lazily restore and/or load at least some of the context 122 from the system memory 116 (e.g., from the context save area 121) into the context storage 105 as the context 106. In some embodiments, the lazy restore circuitry/logic may load such context lazily and/or on demand and/or dynamically and/or when needed and/or selectively during and throughout the operation or execution of the protected software within the protected execution environment 103. In some embodiments, a first subset of the context 122, which is read from, written to, or otherwise needed after entrance into and during the execution within the protected execution environment, may be selectively restored/loaded from the system memory (e.g., from the context save area) to the context storage of the processor. However, a second different subset of the context 122, which is not read from, written to, or otherwise needed after entrance into and during the execution within the protected execution environment, may not be restored/loaded from the system memory (e.g., from the context save area) to the context storage of the processor. For example, portions of the context 122 may be restored/loaded lazily and/or on demand and/or dynamically and/or when needed and/or selectively at the time that instructions of the protected software are executed and access (e.g., read from and/or write to) corresponding portions of the context storage 106 (e.g., registers). Another possible approach is to eagerly restore/load all context in batch at one time immediately upon entering the protected execution environment. However, such eager restoration of all context may restore some context that is never needed, which may consume power unnecessarily and unnecessarily take additional time, which may tend to reduce performance.

In some embodiments, the context save and restore unit may include lazy access control check circuitry or other logic 112 that is operative to lazily perform access control checks for pages or other portions of the system memory 116 used by the protected execution environment 103. Certain types of protected execution environments may eagerly or pre-emptively perform certain page access control checks when a thread enters the protected execution environment. For example, the protected execution environment may use certain pages to securely store processor context under certain conditions (e.g., during an asynchronous exit). As one example, State Save Area (SSA) pages may be used in SGX to store context during asynchronous exits, and conventionally enclave page cache map (EPCM) access control checks may be performed eagerly or pre-emptively on the SSA pages. Such access control checks are conventionally performed eagerly or pre-emptively to ensure that there is a valid location to store data under when exiting the protected execution environment certain conditions (e.g., during an asynchronous exit). If instead the checks are not performed until after context has been written, then there is a chance the checks may fail meaning that there is no secure location to store the modified context, which can lead to data loss. What is done during the access control check may vary from one type of protected execution environment to another. Commonly, the access control check may perform one or more checks to check whether or ensure the page is available and can be used (e.g., that it exists, that it has a correct page type, that it has proper ownership, that it has correct access permissions (e.g., read and/or write and/or execute permissions), or any combination thereof). Conventional execution environments generally do not need to pre-emptively perform such page access control checks, since they can trust privileged system software (e.g., an OS and/or VMM) to store processor context at a valid location, but the same is not true of certain protected execution environments.

In some embodiments, the lazy access control check circuitry/logic 112 may be operative to perform access control checks for pages or other portions of the system memory 116 used by the protected execution environment 103 lazily and/or on demand and/or dynamically and/or when needed and/or selectively during and throughout the operation or execution of the protected software 117 within the protected execution environment 103. In some embodiments, the access control checks may optionally be performed for a first subset of pages, which are actually needed under certain conditions (e.g., asynchronous exits) to store corresponding context that has been read, written, or modified after entrance into and during execution within the protected execution environment. However, the access control checks may optionally be elided, skipped, bypassed, or otherwise omitted for a second different subset of pages, which are not actually needed under these conditions (e.g., asynchronous exits) to store corresponding context since the context has not been read, written, or modified after entrance into and during execution within the protected execution environment. For example, the access control checks may optionally be delayed or deferred and performed lazily and/or on demand and/or dynamically and/or when needed and/or selectively at the time that instructions of the protected software are executed and access (e.g., read from and/or write to) context corresponding to the first subset of pages (e.g., context that would be stored in those pages under certain conditions).

If the access control checks fail at this point, the processor can abandon the read, write, or modify operation, take an exit from the protected execution environment, and signal a fault, without losing the context. Advantageously, avoiding some of the access control checks that are not needed may tend to help reduce latency and/or improve performance and/or reduce power consumption. It is noted that this may introduce page access control checks for instructions that interact with context, even when the instructions do not otherwise access memory (e.g., register-to-register move instructions, instructions that add two registers and store a sum to a destination register, etc.). Also, this may cause such instructions (e.g., those which do not otherwise access memory) to occasionally signal page faults.

In some embodiments, to help support the selective save circuitry/logic 109, the selective sanitize circuity/logic 111, lazy restore circuity/logic 110, and the lazy access control check circuity/logic 112, the logical processor may be operative to maintain context metadata 107. The logical processor may have circuitry or other logic to monitor for and detect accesses to (e.g., reads from and writes to) the context storage 105 and record or otherwise store indications of the accesses in the context metadata 107. For example, the context metadata may include sets of context element metadata for corresponding context elements of the context. The context element metadata may broadly represent one or more bits or values that describes or indicates that context elements have been accessed by at least one retired instruction since entering the protected execution environment. In some embodiments, the context element metadata may include a first set of one or more bits or a value to indicate whether the context element has been read from and a second set of one or more bits or a value to indicate whether the context element has been written to.

In some embodiments, the context metadata 107 may include a set of read indication bits (e.g., an array of read indication bits, referred to herein as R[]). Each read indication bit (e.g., R[i]) may correspond to a different context element of a set of context elements. Each read indication bit (e.g., R[i]) may have either a first bit value (e.g., be cleared to binary zero) to indicate that the corresponding context element has not been read from by a retired operation since entering the protected execution environment or a second different bit value (e.g., be set to binary one) to indicate that the corresponding context element has been read from by a retired operation since entering the protected execution environment. Likewise, the context metadata may include a set of write indication bits (e.g., an array of write indication bits, referred to herein as W[]). Each write indication bit (e.g., W[i]) may correspond to a different context element of the same set of context elements. Each write indication bit (e.g., W[i]) may have either a first bit value (e.g., be cleared to binary zero) to indicate that the corresponding context element has not been written to by a retired operation since entering the protected execution environment or a second different bit value (e.g., be set to binary one) to indicate that the corresponding context element has been written to by a retired operation since entering the protected execution environment. As one specific example, if a logical processor includes 32 vector registers and 8 matrix tiles, then the size of R[] may be 40 bits and the size of W[] may be 40 bits, where each bit corresponds to a single register/tile. In some embodiments, each logical processor may have a different corresponding set of read indication bits and a different corresponding set of write indication bits.

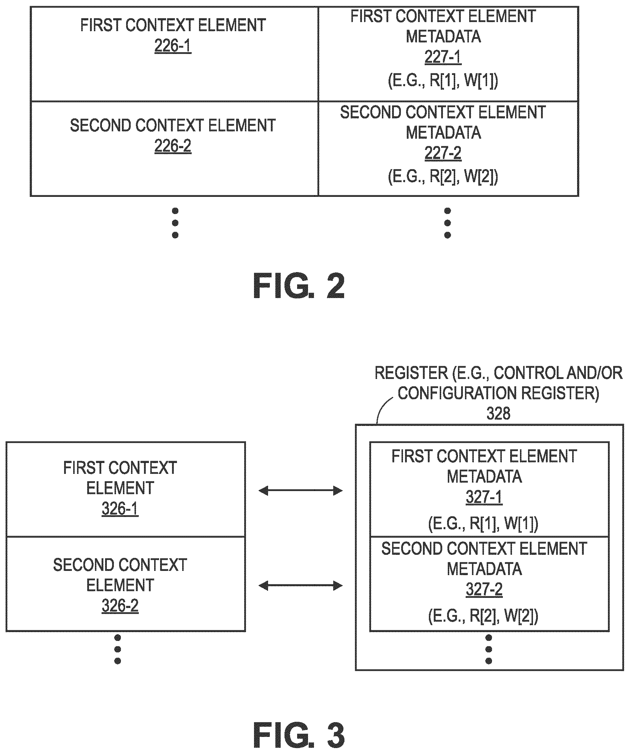

The context element metadata 107 may be stored in different places in different embodiments. FIG. 2 is a block diagram of a first example embodiment in which context element metadata 227 is stored alongside corresponding context elements 226. A first context element 226-1, a second context element 226-2, and optionally other context elements are shown. The context elements may represent elements of context (e.g., a register or set of registers, a tile or set of tiles, etc.). A first context element metadata 227-1 corresponds to and is stored alongside the first context element. A second context element metadata 227-2 corresponds to and is stored alongside the second context element. By way of example, the context element metadata may be stored in one or more bits similar to those used to store error correction codes for registers, poison indications for registers, or the like. There may optionally be other context element metadata for other context elements. In some embodiments, the first context element metadata may include a first read indication bit (e.g., R[1]) of a set of read indication bits (e.g., R[]) and a first write indication bit (e.g., W[1]) of a set of write indication bits (e.g., W[]), and the second context element metadata may include a second read indication bit (e.g., R[2]) of the set of read indication bits (e.g., R[]) and a second write indication bit (e.g., W[2]) of the set of write indication bits (e.g., W[]).

FIG. 3 is a block diagram of a second example embodiment in which a register 328 is used to store context element metadata 327 from corresponding context elements 326. A first context element 326-1, a second context element 326-2, and optionally other context elements are shown. The context elements may represent elements of context (e.g., a register or set of registers, a tile or set of tiles, etc.). A first context element metadata 327-1 corresponds to the first context element. A second context element metadata 327-2 corresponds to the second context element. In this embodiment, the first and second context element metadata are stored in the register 328, such as, for example, a model specific register (MSR) or other control and/or configuration register. The register may typically be physically separate from the registers or other context storage corresponding to the first and second context elements. The register may also optionally store other context element metadata for other context elements. In other embodiments, instead of the register 328, the context element metadata may optionally be stored in an on-die hardware table or other hardware structure, a table or other data structure in sufficiently protected memory, or elsewhere. In some embodiments, the first context element metadata may include a first read indication bit (e.g., R[1]) of a set of read indication bits (e.g., R[]) and a first write indication bit (e.g., W[1]) of a set of write indication bits (e.g., W[]), and the second context element metadata may include a second read indication bit (e.g., R[2]) of the set of read indication bits (e.g., R[]) and a second write indication bit (e.g., W[2]) of the set of write indication bits (e.g., W[]).

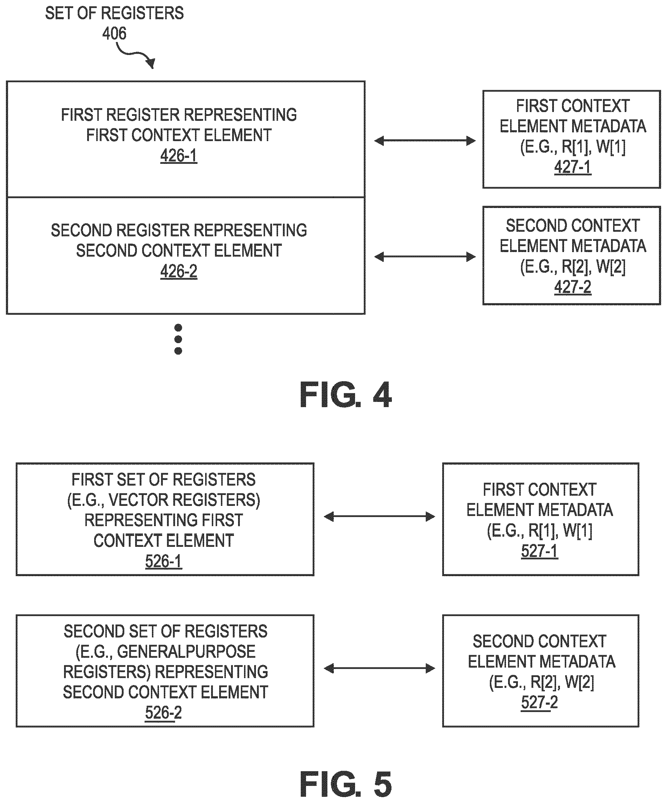

Context element metadata may be defined at different levels of context granularity in different embodiments. FIG. 4 is a block diagram of a first example embodiment in which context element metadata 427 is defined at register granularity. A set of registers 406 includes a first register representing a first context element 426-1, a second register representing a second context element 426-2, and optionally other registers representing other context elements. As one example, the set of registers may represent an architectural set of vector registers and the first and second registers may represent first and second vector registers of the set of vector registers. A first context element metadata 427-1 corresponds to the first register. A second context element metadata 427-2 corresponds to the second register. The context element metadata may be stored alongside the registers, in a separate register (e.g., a control and/or configuration register), another on-die hardware structure, or elsewhere, as previously described. In some embodiments, the first context element metadata may include a first read indication bit (e.g., R[1]) of a set of read indication bits (e.g., R[]) and a first write indication bit (e.g., W[1]) of a set of write indication bits (e.g., W[]), and the second context element metadata may include a second read indication bit (e.g., R[2]) of the set of read indication bits (e.g., R[]) and a second write indication bit (e.g., W[2]) of the set of write indication bits (e.g., W[]). In other embodiments, context element metadata may optionally be defined at granularity of a portion of a register.

FIG. 5 is a block diagram of a second example embodiment in which context element metadata 527 is defined at a register set granularity. A first set of related registers (e.g., a set of vector registers) represents a first context element 526-1, a second set of related registers (e.g., a set of general-purpose registers) represents a second context element 526-2, and optionally other sets of related registers may represent other context elements. The sets of registers may either include the entire sets or a subset including two or more registers. A first context element metadata 527-1 corresponds to the first set of registers. A second context element metadata 527-2 corresponds to the second set of registers. The context element metadata may be stored alongside the registers, in a separate register (e.g., a control and/or configuration register), another on-die structure, or elsewhere, as previously described. In some embodiments, the first context element metadata may include a first read indication bit (e.g., R[1]) of a set of read indication bits (e.g., R[]) and a first write indication bit (e.g., W[1]) of a set of write indication bits (e.g., W[]), and the second context element metadata may include a second read indication bit (e.g., R[2]) of the set of read indication bits (e.g., R[]) and a second write indication bit (e.g., W[2]) of the set of write indication bits (e.g., W[]).

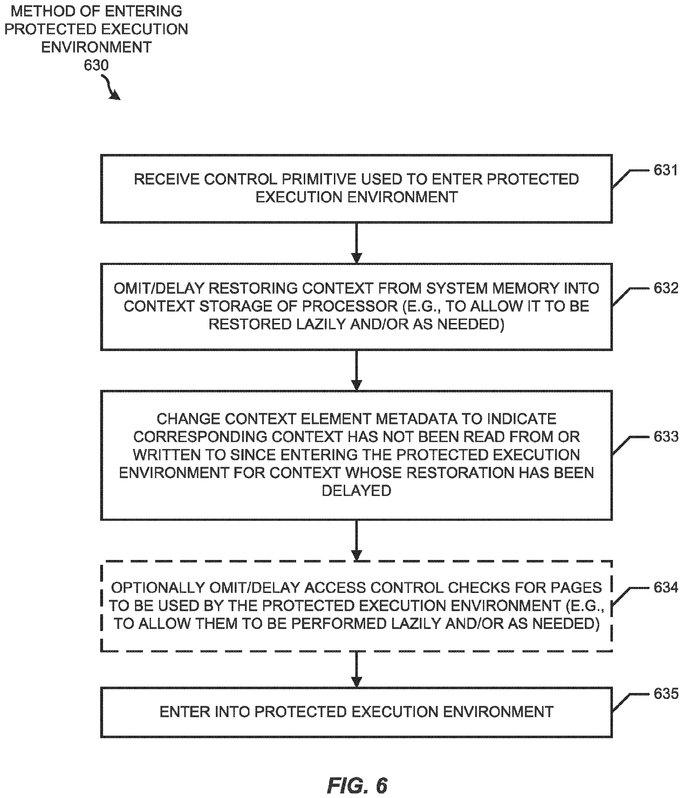

FIG. 6 is a block flow diagram of an embodiment of a method 630 of entering into a protected execution environment. In some embodiments, the method may correspond to and/or be performed in response to a control primitive used to enter a protected execution environment. In various embodiments, the method may be performed by a processor, digital logic device, or integrated circuit. By way of example, the processor 101 or the logical processor 102 may perform this method. The components, features, and specific optional details described herein for the processor 101 or the logical processor 102 may optionally apply to the method. Alternatively, the method 630 may be performed by a similar or different processor or logical processor. Moreover, the processor 101 and the logical processor 102 may perform methods the same as, similar to, or different than the method 630.

The method includes receiving the control primitive used to enter the protected execution environment at block 631. Various different types of control primitives are suitable. One example of a suitable control primitive is a machine language instruction and/or an instruction of an instruction set of a processor. The instruction may have an operation code or opcode that at least partially specifies the operations to be performed (e.g., operations to enter into a protected execution environment). One example of a suitable enter protected execution environment instruction is an ERESUME instruction in SGX that has been modified to perform the method. Another example of a suitable enter protected execution environment instruction is an SEAMCALL[TDH.VP.ENTER] instruction in TDX that has been modified to perform the method. These are just a few illustrative examples.

Another example of a suitable control primitive is an Application Binary Interface (ABI) command, Application Programming Interface (API) command, or other command (e.g., a command code, command identifier, etc.) that may be stored in one or more control registers (e.g., one or more memory-mapped input and/or output (MMIO) registers). The command may at least partially specify an operation to be performed. In some cases, one or more additional data structures and/or storage locations explicitly specified or otherwise indicated (e.g., implicitly indicated) by the command may optionally be used to provide additional information to specify the operation to be performed, to provide input values, and to receive output values (e.g., the first destination storage location).

The method includes omitting and/or delaying restoring at least some context from system memory (e.g., from a context save area in the system memory) into context storage of the processor (e.g., to allow it to be restored lazily and/or as needed), at block 632. As discussed above, in some embodiments, the context may be restored/loaded lazily and/or on demand and/or dynamically and/or when needed and/or selectively during and throughout the operation or execution of protected software within the protected execution environment. For example, portions of the context (e.g., data in registers) may be restored/loaded lazily and/or on demand and/or dynamically and/or as they are needed and/or selectively at the time that instructions of the protected software are executed and access (e.g., read from and/or write to) corresponding portions of the context storage of the processor (e.g., registers).

In some embodiments, the omitting and/or delaying restoring of context may optionally be applied to all context of a processor (e.g., irrespective of the amount of such context, how likely it is to be modified during execution within the protected execution environment, etc.). In other embodiments, the omitting and/or delaying restoring of context may optionally be applied to only a subset of all context of a processor. For example, the omitting and/or delaying restoring of context may optionally be applied to a subset context having a relatively large amount of data (e.g., vector registers and tile storage), but not to another subset of context having a relatively small amount of data (e.g., an instruction pointer, general-purpose registers). As another example, the omitting and/or delaying restoring of context may optionally be applied to a subset context having a greater likelihood of not being used (e.g., a widest set of vector registers, tile storage, accelerator context, etc.), but not to another subset of context that will typically always be used (e.g., an instruction pointer, general-purpose registers, etc.). Moreover, an embodiment can use heuristics to determine which context is frequently used by the logical processor in the protected execution environment and optionally eagerly restore at least some frequently used context.

The method includes changing or updating context element metadata, for context elements whose restoration is delayed at block 633, to indicate that the corresponding context elements have not been read from or written by a retired or otherwise committed operation since entering the protected execution environment. For example, this may include clearing or otherwise changing or updating a set of read indication bits (e.g., R[]) so they indicate the corresponding context elements have not been read from by a retired operation since entering the protected execution environment, and clearing or otherwise changing or updating a set of write indication bits (e.g., W[]) so they indicate the corresponding context elements have not been written to by a retired operation since entering the protected execution environment. Subsequently, the read and write indication bits may be updated as their corresponding context elements are read from and written to in order to track the context elements that have been accessed during execution within the protected execution environment.

The method optionally includes omitting and/or delaying access control checks for pages or other portions of the system memory to be used by the protected execution environment, at block 634. As discussed above, in some embodiments, these access control checks may optionally be performed lazily and/or on demand and/or dynamically and/or when needed and/or selectively during and throughout the operation or execution of the protected software within the protected execution environment. For example, the access control checks may optionally be delayed or deferred and performed lazily and/or on demand and/or dynamically and/or when needed and/or selectively at the time that instructions of the protected software are executed and access (e.g., read from and/or write to) context corresponding to the first subset of pages (e.g., context that would be stored in those pages under certain conditions). For example, in some embodiments, the access control checks may optionally be delayed or deferred until the corresponding context is first read, written, or modified after entrance into the protected execution environment. Delaying the access control checks at block 634 is optional. Also, some types of protected execution environments may not necessarily implement such access control checks, so there may be no need to delay such access control checks. The method includes entering into the protected execution environment, at block 635. Change the mode of operation to the mode used for the protected execution environment (e.g., this may include changing one or more bits in one or more control and/or status registers).

FIG. 6 is just one example method. Some types of protected execution environments initialized certain context elements to a predetermined context or value when initially entering the protected execution environment. Such initialization also takes time and consumes power. In some embodiments, a method like FIG. 6 may also include selective initialization of a subset of the context elements to allow the initialization to be delayed and performed lazily and/or on demand and/or only when needed. At least some such initialization may optionally be elided entirely if the corresponding context element is never actually accessed and/or if the corresponding context element is written to before it is read from.

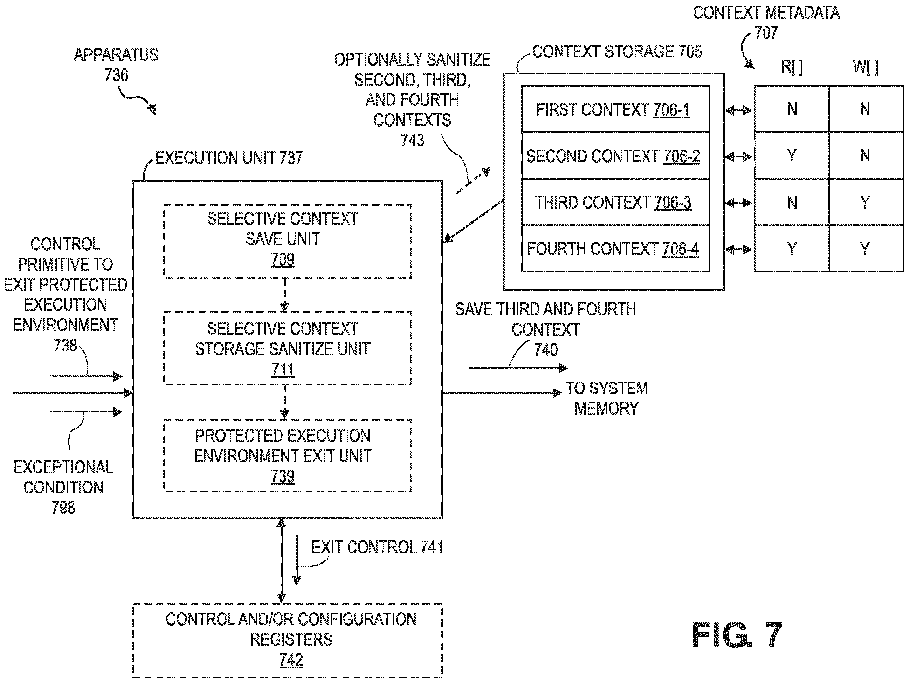

FIG. 7 is a block diagram of an embodiment of an apparatus 736 that is operative to perform an embodiment of a control primitive to exit a protected execution environment or asynchronously exit the protected execution environment due to an exceptional condition 798. In various embodiments, the apparatus may be a processor, an integrated circuit, a system-on-chip (SoC), or a computer system.

The apparatus may be coupled to receive the control primitive 738. Suitable types of control primitives include, but are not limited to, those discussed above for FIG. 6 (e.g., an instruction of an instruction set of a processor, an ABI command, an API command, another type of command, etc.). One specific example of a suitable instruction is an ERESUME instruction in SGX that has been modified to have selective context save and selective context storage sanitization aspects and use the context metadata as described further below. In other embodiments, instead of exiting due to the control primitive, an asynchronous exit may be initiated due to an exceptional condition 798 (e.g., an interrupt, an exception, etc.).

The apparatus includes context storage 705. Examples of suitable context storage includes, but is not limited to, a set of general-purpose registers, one or more sets of vector registers of different vector widths, mask registers, other types of architectural registers, a set of tile registers or other tile storage to store matrix or other two-dimensional data, context storage of one or more coprocessors or accelerators, various other types of architectural storage, and various combinations thereof.

The context storage is used to store context. In the illustrated example, the context is grouped into four types or bins. Each of the four types or bins of context has a different one of four combinations of context metadata 707. Specifically, in the illustrated example embodiment, the context metadata includes a set of read indication bits, R[] to indicate whether content has been read (labeled "Y"), or has not been read (labeled "N"), during execution after entering the protected execution environment. Likewise, the illustrated example context metadata also includes a set of read indication bits, W[] to indicate whether content has been written (labeled "Y"), or has not been written (labeled "N"), during execution after entering the protected execution environment. A first context 706-1 is a subset of context whose corresponding metadata bits indicate it has not been read and has not been written. A second context 706-2 is a subset of context whose corresponding metadata bits indicate it has been read but has not been written. A third context 706-3 is a subset of context whose corresponding metadata bits indicate it has not been read but has been written. A fourth context 706-4 is a subset of context whose corresponding metadata bits indicate it has been read and has been written. The context metadata may be stored in the various places previously described (e.g., stored alongside corresponding context, stored in a control and/or configuration register, stored in a dedicated structure of the processor, stored in a table in memory, etc.).

The apparatus also includes an execution unit 737. The execution unit may broadly represent circuitry or other logic that is operative to perform operations corresponding to the control primitive 738. In some embodiments, the execution unit may be operative to selectively save and/or store context, which has been written to during execution after entering and while within the protected execution environment, from the context storage 705 to system memory (e.g., to a context save area in the system memory), without saving/storing context, which has not been written to during execution after entering and while within the protected execution environment, from the context storage to system memory. For example, in the illustrated embodiment, the execution unit may save 740 the third context 706-3 and the fourth context 706-4 to the system memory (e.g., to a context save area in the system memory), but may not save the first context 706-1 or the second context 706-2 to the system memory. In some embodiments, the execution unit may optionally include a selective context save unit 709 to selectively save such context which has been written. The selective context save unit may include hardware, firmware, software, or a combination (e.g., at least some circuitry potentially combined with some firmware).

In some embodiments, the execution unit may optionally be operative to selectively sanitize context and/or context storage, which has been read from and/or written to during execution after entering and while within the protected execution environment, without sanitizing context and/or context storage, which has not been read from and has not been written to during execution after entering and while within the protected execution environment. For example, in the illustrated embodiment, the execution unit may optionally sanitize 743 the second context 706-2, the third context 706-3, and the fourth context 706-4. Sanitizing these contexts may also represent sanitizing their corresponding context storage. Examples of suitable ways of sanitizing include, but are not limited to, overwriting the context and/or the context storage (e.g., with all zeroes, all ones, a predetermined meaningless value, or some other benign value), resetting the context storage to a predetermined, default, or reset value, encrypting, scrambling, or otherwise obfuscating the context in the context storage, compromising the context in the context storage in a way that obfuscated the context, or otherwise altering or changing the context. However, for the illustrated example embodiment, the execution unit may not sanitize the first context 706-1, since it has neither been read from or written to. That is, sanitization of at least a portion of the context not containing confidential information may optionally be elided. In some embodiments, the execution unit may optionally include a selective context and/or context storage sanitation unit 711 to selectively sanitize context and/or context storage. The selective context and/or context storage sanitation unit may include hardware, firmware, software, or a combination (e.g., at least some circuitry potentially combined with some firmware).

The execution unit may also be operative to exit the protected execution environment. This may be done in different ways in different embodiments depending upon the type of protected execution environment. In some embodiments, this may include providing an exit control to change an operating mode to a mode used for the untrusted software (e.g., in some cases this may be done by writing one or more bits in one or more control and/or configuration registers). In some embodiments, metadata may optionally be recorded (e.g., to describe a reason for the exit). In some embodiments, the execution unit may optionally include a protected execution environment exit unit 739 to exit the protected execution environment. The selective context and/or context storage sanitation unit may include hardware, firmware, software, or a combination (e.g., at least some circuitry potentially combined with some firmware).

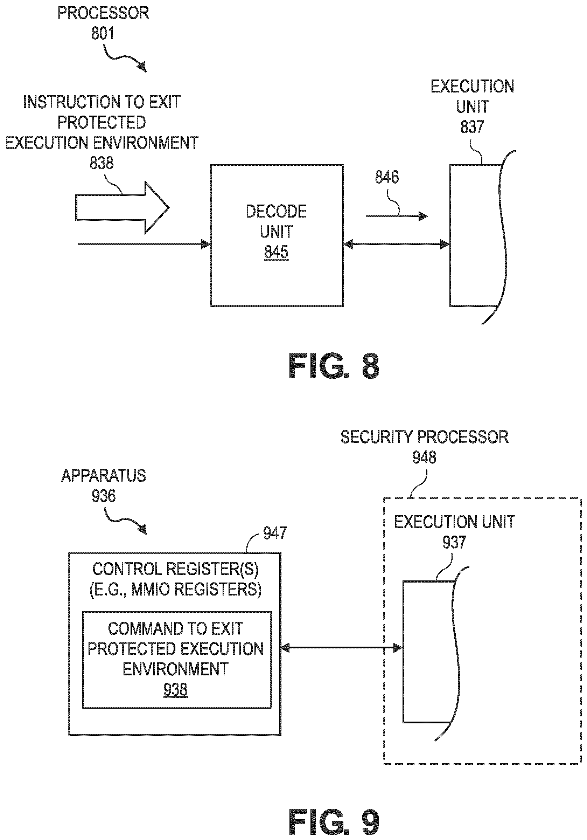

FIG. 8 is a block diagram of an embodiment of a processor 801 that is operative to perform an embodiment of an instruction 838 to exit a protected execution environment. The previously described types of general-purpose and special-purpose processors are suitable. The processor may have any of various complex instruction set computing (CISC) architectures, reduced instruction set computing (RISC) architectures, very long instruction word (VLIW) architectures, or hybrid architectures. In some embodiments, the processor may include (e.g., be disposed on) at least one integrated circuit or semiconductor die. In some embodiments, the processor may include at least some hardware (e.g., transistors, capacitors, circuitry, non-volatile memory storing circuit-level instructions/control signals).

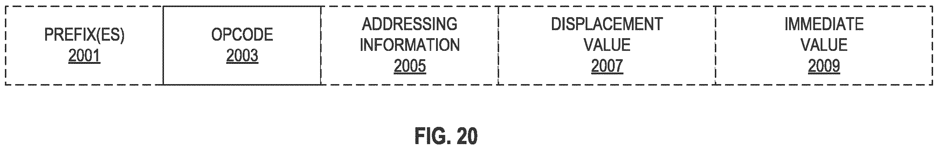

The processor includes a decode unit 845 (e.g., including decode circuitry). The decoder unit may be coupled to receive the instruction 838. The instruction may represent a macroinstruction, a machine code instruction, or an instruction of an instruction set of the processor. The instruction may have an operation code or opcode that at least partially specifies the operations to be performed (e.g., to exit the protected execution environment, to selectively store context, optionally to selectively sanitize, etc.). The instruction may have various formats or encodings, such as, for example, those described further below (e.g., for FIGs. 20-25).

The decode unit may be operative to decode the instruction into one or more lower-level control signals, operations, or decoded instructions 846 (e.g., one or more micro-instructions, micro-operations, micro-code entry points, or the like). The decode unit may be implemented using various instruction decode mechanisms including, but not limited to, microcode read only memories (ROMs), look-up tables, hardware implementations, programmable logic arrays (PLAs), other mechanisms suitable to implement instruction decode units, and combinations thereof. In some embodiments, the decode unit may include at least some hardware (e.g., transistors, integrated circuitry, on-die read-only memory or other non-volatile memory storing microcode or other hardware-level instructions, or any combination thereof). In some embodiments, the decode unit may be included on a die, integrated circuit, or semiconductor substrate.

An execution unit 837 (e.g., including execution circuitry) is coupled with the decode unit 845 (e.g., to receive the one or more lower-level control signals, operations, or decoded instructions 846). In some embodiments, the execution unit may be on a die or integrated circuit along with the decode unit. The execution unit may be operative to perform operations corresponding to the instruction. For example, one or more lower-level control signals, operations, or decoded instructions may control the execution unit to perform operations corresponding to the instruction. The operations may be the same as or similar to those already described for FIG. 7. To avoid obscuring the description, those operations will not be repeated. The processor may also have architectural registers and/or other context storage (not shown), as previously described.

FIG. 9 is a block diagram of an embodiment of an apparatus 936 that is operative to perform an embodiment of a command 938 to exit a protected execution environment. In various embodiments, the apparatus may be a processor, an integrated circuit, a system-on-chip (SoC), or a computer system.

The apparatus includes one or more control registers 947 coupled to receive and store the command 938. In some embodiments, the control registers may optionally be memory-mapped input/output (MMIO) registers, mailbox registers, or the like. The command may be an ABI command, an API command, or another type of command. The command may include a command code, command identifier, or the like. The command code or command identifier may at least partially specify an operation to be performed (e.g., to exit the protected execution environment, to selectively store context, optionally to selectively sanitize, etc.). In some cases, one or more registers and/or data structures and/or storage locations explicitly specified or otherwise indicated (e.g., implicitly indicated) by the command may optionally be used to provide additional information to specify the operation to be performed, to provide input values, and to receive output values and/or status.

An execution unit 937 (e.g., including execution circuitry) is coupled with the control register(s) 947. The execution unit may also be coupled to access the source and destination storage locations and/or data structures. As shown, in some embodiments, the execution unit may optionally be part of a security processor (e.g., a security coprocessor), although that is not required. The execution unit may include hardware, software, firmware, or a combination thereof. The execution unit may be operative to perform operations corresponding to the command. The operations may be the same as or similar to those already described for FIG. 7. To avoid obscuring the description, those operations will not be repeated.

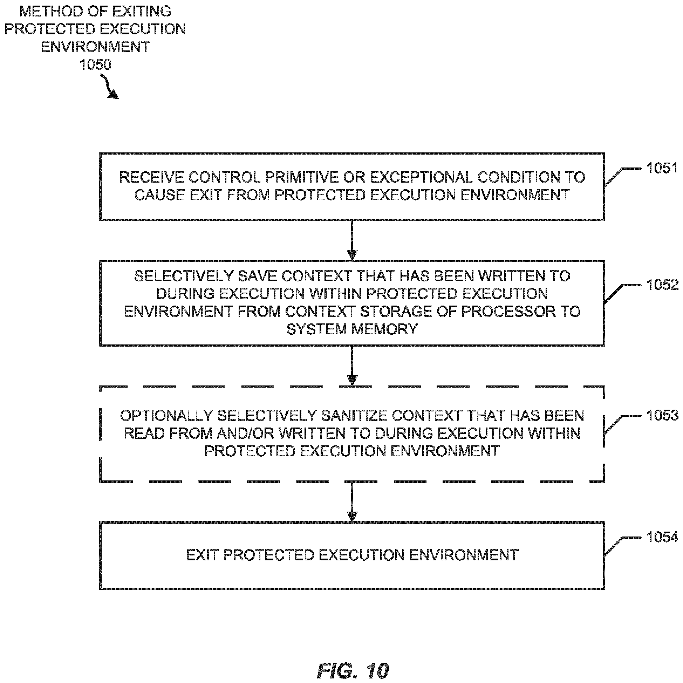

FIG. 10 is a block flow diagram of an embodiment of a method 1050 of exiting a protected execution environment. In some embodiments, the method may correspond to and/or be performed in response to a control primitive used to exit a protected execution environment. In other embodiments, the method may correspond to and/or be performed in response to an exceptional condition (e.g., an exception, an interrupt, etc.). In various embodiments, the method may be performed by a processor, digital logic device, or integrated circuit. By way of example, the apparatus 736 and/or the execution unit 737 may perform this method. The components, features, and specific optional details described herein for the apparatus 736 and/or the execution unit 737 may optionally apply to the method. Alternatively, the method 1050 may be performed by a similar or different apparatus, logical processor, or execution unit. Moreover, the apparatus 736 and the execution unit 737 may perform methods the same as, similar to, or different than the method 1050.

The method includes receiving the control primitive or the exceptional condition to cause an exit from the protected execution environment at block 1051. Suitable types of control primitives include, but are not limited to, those discussed (e.g., an instruction of an instruction set of a processor, An ABI command, an API command, or another type of command).

The method includes selectively saving and/or storing context, which has been written to during execution within the protected execution environment, from context storage of the processor to system memory (e.g., to a context save area in the system memory), at block 1052. In some embodiments, a first subset of the context, which has been modified or otherwise written to during execution within the protected execution environment, may be selectively saved/stored from the context storage of the processor to the system memory (e.g., to a context save area in the system memory). However, a determination may be made that a second different subset of the context (e.g., at least some context), which has not been modified or otherwise written during the execution within the protected execution environment, may not be saved/stored from the context storage of the processor to the system memory. In some embodiments, the protected execution environment may have additional or separate control over what context is selectively saved (e.g., control to skip saving some context). For example, SGX and TDX can cause the saving of some context to be skipped.

The method includes optionally selectively sanitizing context and/or context storage, which has been read from and/or written to during execution within the protected execution environment, at block 1053. In some embodiments, a first subset of the context and/or a first subset of the context storage, which has been read from and/or written to during execution within the protected execution environment, may be selectively sanitized when exiting the protected execution environment. However, a determination may be made that a second different subset of the context and/or a second different subset of the context storage, which has not been read from or written to during the execution within the protected execution environment, may not be sanitized when exiting the protected execution environment. That is, sanitization of at least a portion of the context not containing confidential information may optionally be elided. Examples of suitable ways of sanitizing include, but are not limited to, overwriting the context and/or the context storage (e.g., with all zeroes, all ones, a predetermined meaningless value, or some other benign value), resetting the context storage to a predetermined, default, or reset value, encrypting, scrambling, or otherwise obfuscating the context in the context storage, compromising the context in the context storage in a way that obfuscated the context, or otherwise altering or changing the context.

The method includes exiting the protected execution environment, at block 1054. This may be done as previously described.

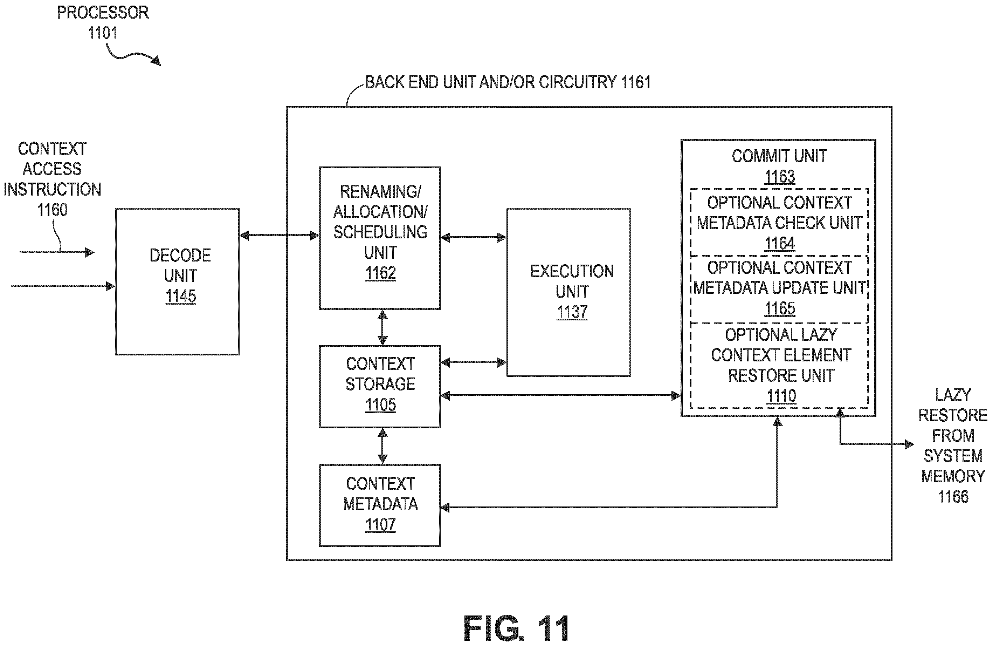

FIG. 11 is a block diagram of an embodiment of a processor 1101 that is operative to perform an embodiment of a context access instruction 1160. In some embodiments, the processor may be a general-purpose processor (e.g., a general-purpose microprocessor or central processing unit (CPU) of the type used in desktops, laptops, servers, and other computer systems). Alternatively, the processor may be a special-purpose processor. Examples of suitable special-purpose processors include, but are not limited to, co-processors, graphics processors (e.g., general-purpose GPUs), security processors, machine-learning processors, artificial intelligence processors, network processors, and controllers (e.g., microcontrollers). The processor may have any of various complex instruction set computing (CISC) architectures, reduced instruction set computing (RISC) architectures, very long instruction word (VLIW) architectures, hybrid architectures, other types of architectures. In some embodiments, the processor may include (e.g., be disposed on) at least one integrated circuit or semiconductor die and may include at least some hardware (e.g., transistors, circuitry, etc.).

The processor may be coupled to receive the context access instruction 1160 (e.g., from system memory). The context access instruction may represent a macroinstruction, machine code instruction, or other instruction of an instruction set of a processor. The context access instruction broadly represents an instruction that when performed accesses (e.g., reads, writes, or reads and writes) at least some context (e.g., one or more architectural registers, tile storage, accelerator context, etc.). In some embodiments, the context access instruction may explicitly specify (e.g., through one or more fields or a set of bits), or otherwise indicate (e.g., implicitly indicate), one or more source operands and/or one or more destination operands. The numbers and types of operands may vary from one type of context access instruction to another. As one illustrative example, the context access instruction may be an instruction to move context from a source vector register to a destination vector register, and the context access instruction may specify or otherwise indicate the source and destination vector registers. As another illustrative example, the context access instruction may be an instruction to perform an arithmetic operation on first and second source vector registers and store a result vector in a destination vector register, and the context access instruction may specify or otherwise indicate the first and second source vector registers and the destination vector register. In some cases, the instruction may have source and/or destination operand specification fields to specify registers, memory locations, or other storage locations for the operands. In other cases, a register or other context may be implicit to the instruction without needing to be specified by a field. A combination of these approaches may also be used. The instruction may have one or more fields for an opcode that at least partially or fully specifies the operation to be performed. The instruction may have various formats or encodings, such as, for example, those described further below (e.g., for FIGs. 20-25).

Referring again to FIG. 11, the processor includes a decode unit 1145 (e.g., decode circuitry). The decode unit may be coupled to receive the context access instruction. The decode unit may be operative to decode the context access instruction into one or more lower-level control signals, operations, or decoded instructions (e.g., one or more micro-instructions, micro-operations, micro-code entry points, etc.). In some embodiments, the decode unit may include at least one input structure (e.g., a port, interconnect, or interface) coupled to receive the context access instruction, an instruction recognition and decode logic coupled therewith to recognize and decode the context access instruction into one or more lower-level control signals, operations, or decoded instructions, and at least one output structure (e.g., a port, interconnect, or interface) coupled therewith to output the one or more lower-level control signals, operations, or decoded instructions. The decode unit and/or its instruction recognition and decode logic may be implemented using various instruction decode mechanisms including, but not limited to, microcode read only memories (ROMs), look-up tables, hardware implementations, programmable logic arrays (PLAs), other mechanisms suitable to implement instruction decode unit, and combinations thereof. In some embodiments, the decode unit may include at least some hardware (e.g., transistors, integrated circuitry, on-die read-only memory or other non-volatile memory storing microcode or other hardware-level instructions, or any combination thereof). In some embodiments, the decode unit may be included on a die, integrated circuit, or semiconductor substrate.

The processor also includes a back-end unit and/or circuitry 1161 including a number of components as shown. In some examples, register renaming, register allocation, and/or scheduling circuitry 1162 may provide functionality for one or more of: 1) renaming logical operand values to physical operand values (e.g., a register alias table in some examples), 2) allocating status bits and flags to the decoded instruction, and 3) scheduling the decoded instruction for execution by execution circuitry out of an instruction pool (e.g., using a reservation station in some examples).

The processor also includes context storage 1105. The context storage is used to store context elements. The context elements have corresponding context metadata 1107. The context metadata may be stored in the various places previously described.

An execution unit 1137 (e.g., execution circuitry) is coupled with the decode unit 1145 (e.g., to receive the one or more lower-level control signals, operations, or decoded instructions). In some embodiments, the execution unit may be on a die or integrated circuit along with the decode unit. The execution unit may be operative to perform operations corresponding to the context access instruction 1160. For example, the one or more lower-level control signals, operations, or decoded instructions may be executed by the execution unit to control the execution unit to perform operations corresponding to the context access instruction. The operations may include accessing one or more context elements in the context storage 1105 as prescribed by the particular context access instruction. For example, depending upon the particular type of context access instruction, this may include reading context in a register, writing context to a register, or both reading context from a register and writing context to the register, or a combination thereof. In some embodiments, the operations may also optionally include other operations depending upon the particular type of instruction (e.g., addition, multiplication, or other arithmetic operations, shifting, rotating, or other logical operations, etc.). The scope of the invention is not limited to any known type of context access instruction or these various possible types of operations.

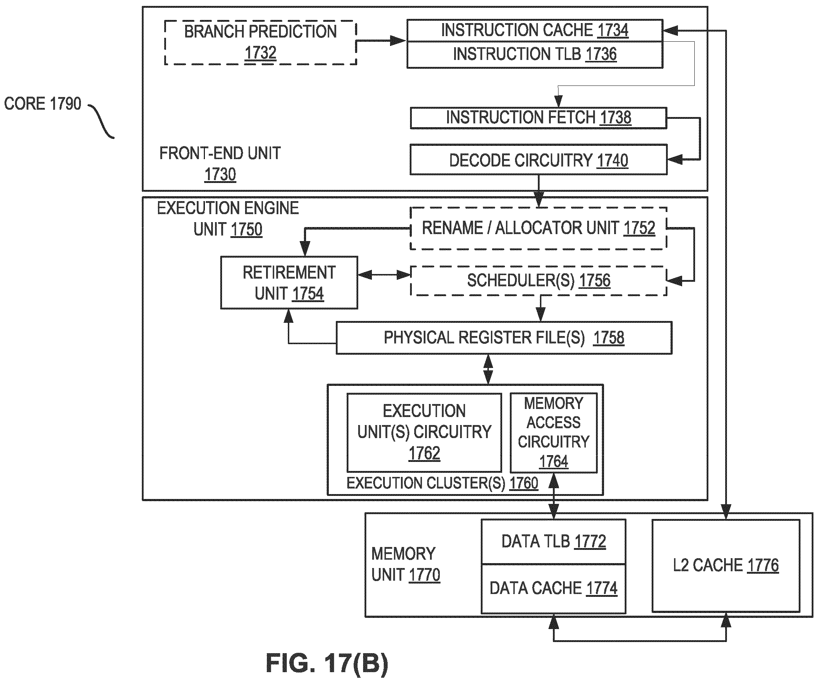

The execution unit and/or the processor may include specific or particular logic (e.g., transistors, integrated circuitry, or other hardware potentially combined with firmware (e.g., instructions stored in non-volatile memory) and/or software) that is operative to perform the context access instruction. In some cases, the execution unit may include an arithmetic unit, an arithmetic logic unit, or a digital circuit to perform arithmetic and logical operations, or the like. In some embodiments, the execution unit may include one or more input structures (e.g., a port, interconnect, or interface) coupled to receive one or more source operands, circuitry or logic coupled therewith to receive and process the one or more source operands and generate a result operand, and one or more output structures (e.g., a port, interconnect, or interface) coupled therewith to output the result operand. In one example, the execution unit includes execution cluster(s) 1760 shown in FIG. 17(B).

Referring again to FIG. 11, a retire or other commit unit 1163 may be operative to commit the context access instruction. Committing the context access instruction may include committing results of context access operations to architectural state.

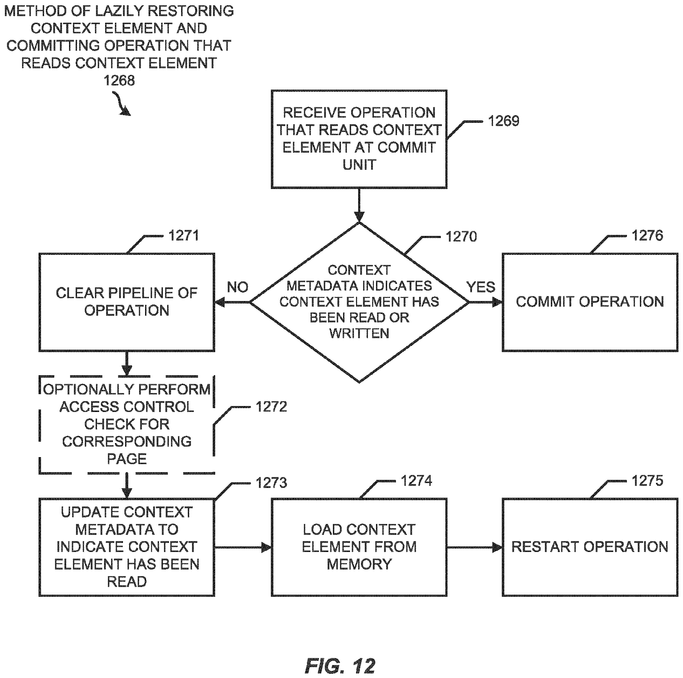

In some embodiments, the commit unit may include an optional context metadata check unit 1164, an optional context metadata update unit 1165, and an optional lazy context element restore unit 1110. Each of these units may be implemented in hardware, firmware, software, or a combination (e.g., at least some circuitry potentially combined with some firmware). In some embodiments, the commit unit and/or the optional context metadata check unit may be operative to check corresponding context metadata 1107 for one or more context elements to be accessed. In some embodiments, the commit unit and/or the optional context metadata update unit may be operative to update corresponding context metadata for one or more context elements to be accessed. In some embodiments, the commit unit and/or the optional lazy context element restore unit may be operative to lazily restore 1166 one or more context elements from system memory to the context storage when the corresponding context metadata indicates they have not yet been restored. In some embodiments, the commit unit and/or the optional lazy context element restore unit may be operative to lazily perform one or more access control checks for one or more corresponding pages to be used for one or more context elements when the corresponding context metadata indicates they have not yet been restored. In some embodiments, the commit unit and its optional sub-units may be operative to perform the operations of any one or more of FIGs. 12-14, depending upon the particular type of context access instruction. Alternatively, such sub-units and their operations do not have to be performed at the commit stage but rather could be performed at execution or another stage (e.g., if a mechanism is included to rollback changes made for non-committed execution).

FIGs. 12-14 are block flow diagrams of embodiments of methods. In some embodiments, each of the methods may be performed as part of the execution of and/or in response to a context access instruction (e.g., an instruction that when performed causes a register or other context to be read and/or written). In various embodiments, the methods may be performed by a processor, digital logic device, or integrated circuit. In some embodiments, the methods may be performed by the processor 101 of FIG. 1 and/or the processor 1101 of FIG. 11. The components, features, and specific optional details described herein for the processor 101 and/or the processor 1101 may optionally apply to the methods. Alternatively, the methods may be performed by similar or different processors. Moreover, the processor 101 and/or the processor 1101 may perform methods the same as, similar to, or different than the methods.

FIG. 12 is a block flow diagram of an embodiment of a method 1268 of lazily restoring a context element, and committing an operation that reads the context element. At block 1269, the operation that reads the context element is received at a retire unit or other commit unit. The commit unit may be circuitry or other logic to perform commit which commits context to architecturally-visible context.

At block 1270, a determination is made whether context metadata corresponding to the context element indicates that the context element has either been read or written. For example, in some embodiments, this may include checking a corresponding read indication bit (e.g., R[i]), of a set of read indication bits (e.g., R[]), to see if the corresponding read indication bit is cleared or otherwise indicates that the corresponding context element has not yet been read after entering the protected execution environment. Further, in some embodiments, this may include checking a corresponding write indication bit (e.g., W[i]), of a set of write indication bits (e.g., W[]), to see if the corresponding write indication bit is cleared or otherwise indicates that the corresponding context element has not yet been written after entering the protected execution environment.

If the context metadata indicates that the context element has either been read or written (i.e., "yes" is the determination at block 1270), then the method may advance to block 1276. Since the context element has either been read or written, the context element does not need to be restored from system memory, and it will generally have a correct and intended value. At block 1276, the operation may be retired or otherwise committed.

Conversely, if the context metadata indicates that the context element has not been read and has not been written (i.e., "no" is the determination at block 1270), the method may advance to block 1271. Since the context element has not been read and has not been written, the context element will generally have an incorrect value and should be removed from the pipeline. At block 1271, a pipeline may be cleared of the operation. For example, the pipeline may be squashed, nuked, or the like.

At block 1272, an access control check for a corresponding page or other portion of the system memory to be used for the context element (e.g., to store the context element in the event of an asynchronous exit and/or certain other conditions) may optionally be performed. As discussed above for block 634 of FIG. 6, the access control check for the corresponding page or other portion of the system memory to be used for the context element may optionally have been initially omitted or delayed. As discussed above, in some embodiments, the access control check may optionally be performed lazily and/or on demand and/or dynamically and/or when needed and/or selectively during the operation or execution of the protected software within the protected execution environment. In some embodiments, the operation that reads the context element may be the triggering event to initiate or cause the access control check to be performed. Since block 1272 is reached after the determination that the context element has not been read and has not been written, the operation that reads the context element may represent the first read of the context element after entering the protected execution environment. Performing the access control check at this point may represent performing the access control check just in time before there is a chance that context could be lost in the event of an asynchronous exit and/or certain other conditions due to not having a proper place to store the context element. The access control check may vary from one type of protected execution environment to another. Commonly, the access control check may perform one or more checks to check whether or ensure the page is available and can be used (e.g., that it exists, that it has a correct page type, that it has proper ownership, that it has correct access permissions (e.g., read and/or write and/or execute permissions), or any combination thereof). It is to be appreciated that performing the access control check is optional not required. For one thing, in other embodiments, the access control check need not be delayed and may instead be performed as part of the method of FIG. 6. For another thing, some types of protected execution environments may natively not feature such an access control check.

At block 1273, the context metadata may be updated or otherwise changed to indicate that the context element has been read. For example, in some embodiments, this may include setting, updating, or otherwise changing a corresponding read indication bit (e.g., R[i]), of a set of read indication bits (e.g., R[]), so that it indicates that the corresponding context element has been read after entrance into and during execution within the protected execution environment.

At block 1274, the context element may be restored or otherwise loaded from system memory. For example, a value may be loaded from a context save area in memory into the corresponding register or other context storage location of the processor. At block 1275, the operation may be restarted. The restarted operation may now read the restored context and proceed to advance through block 1269, block 1270, and block 1276 where it is committed.

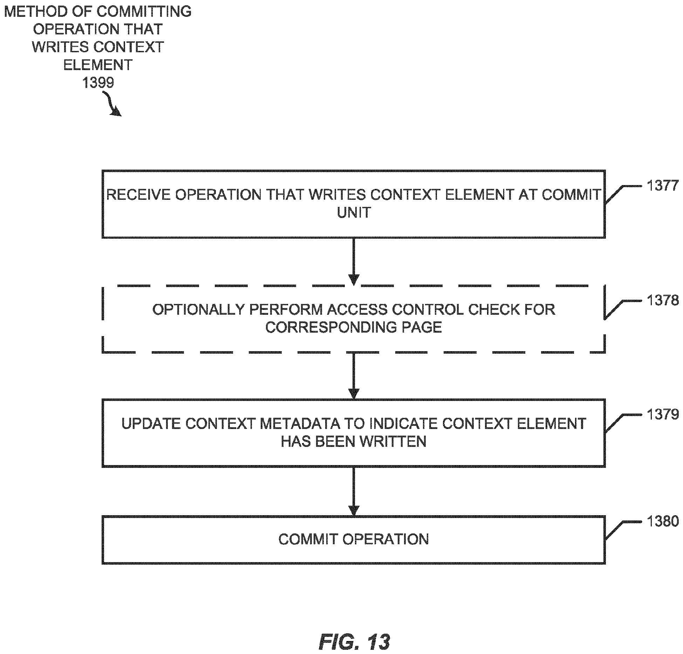

FIG. 13 is a block flow diagram of an embodiment of a method 1399 of committing an operation that writes a context element. At block 1377, the operation that writes the context element is received at a retire unit or other commit unit. The commit unit may be circuitry or other logic to perform commit which commits context to architecturally-visible context.

At block 1378, an access control check for a corresponding page or other portion of the system memory to be used for the context element (e.g., to store the context element in the event of an asynchronous exit and/or certain other conditions) may optionally be performed. As discussed above for block 634 of FIG. 6, the access control check for the corresponding page or other portion of the system memory to be used for the context element may optionally have been initially omitted or delayed. As discussed above, in some embodiments, the access control check may optionally be performed lazily and/or on demand and/or dynamically and/or when needed and/or selectively during the operation or execution of the protected software within the protected execution environment. In some embodiments, the operation that writes the context element may be the triggering event to initiate or cause the access control check to be performed. Since block 1378 is reached after the determination that the context element has not been read and has not been written, the operation that writes the context element may represent the first write of the context element after entering the protected execution environment. Performing the access control check at this point may represent performing the access control check just in time before there is a chance that context could be lost in the event of an asynchronous exit and/or certain other conditions due to not having a proper place to store the context element. It is to be appreciated that performing the access control check is optional not required. For one thing, in other embodiments, the access control check need not be delayed and may instead be performed as part of the method of FIG. 6. For another thing, some types of protected execution environments may natively not feature such an access control check.

At block 1379, the corresponding context metadata may be updated or otherwise changed to indicate that the context element has been written. For example, in some embodiments, this may include setting, updating, or otherwise changing a corresponding write indication bit (e.g., W[i]), of a set of write indication bits (e.g., W[]), so that it indicates that the corresponding context element has been written after entrance into and during execution within the protected execution environment. At block 1380, the operation that writes a context element may be retired or otherwise committed.

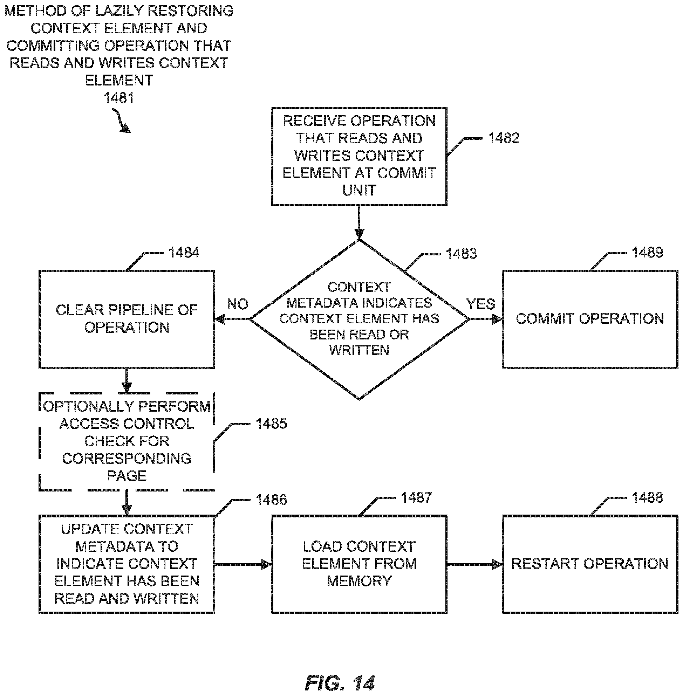

FIG. 14 is a block flow diagram of an embodiment of a method 1481 of lazily restoring a context element, and committing an operation that reads and then writes the context element. At block 1482, the operation that reads and then writes the context element is received at a retire unit or other commit unit.

At block 1483, a determination is made whether context metadata corresponding to the context element indicates that the context element has either been read or written. For example, in some embodiments, this may include checking a corresponding read indication bit (e.g., R[i]), of a set of read indication bits (e.g., R[]), to see if the corresponding read indication bit is cleared or otherwise indicates that the corresponding context element has not yet been read after entering the protected execution environment. Further, in some embodiments, this may include checking a corresponding write indication bit (e.g., W[i]), of a set of write indication bits (e.g., W[]), to see if the corresponding write indication bit is cleared or otherwise indicates that the corresponding context element has not yet been written after entering the protected execution environment.

If the context metadata indicates that the context element has either been read or written (i.e., "yes" is the determination at block 1483), then the method may advance to block 1489. Since the context element has either been read or written, the context element does not need to be restored from system memory, and it will generally have a correct and intended value. At block 1489, the operation may be retired or otherwise committed.

Conversely, if the context metadata indicates that the context element has not been read and has not been written (i.e., "no" is the determination at block 1483), the method may advance to block 1484. Since the context element has not been read and has not been written, the context element will generally have an incorrect value and should be removed from the pipeline. At block 1484, a pipeline may be cleared of the operation. For example, the pipeline may be squashed, nuked, or the like.

At block 1485, an access control check for a corresponding page or other portion of the system memory to be used for the context element (e.g., to store the context element in the event of an asynchronous exit and/or certain other conditions) may optionally be performed. As discussed above for block 634 of FIG. 6, the access control check for the corresponding page or other portion of the system memory to be used for the context element may optionally have been initially omitted or delayed. As discussed above, in some embodiments, the access control check may optionally be performed lazily and/or on demand and/or dynamically and/or when needed and/or selectively during the operation or execution of the protected software within the protected execution environment. In some embodiments, the operation that reads the context element may be the triggering event to initiate or cause the access control check to be performed. Since block 1485 is reached after the determination that the context element has not been read and has not been written, the operation that reads the context element may represent the first read of the context element after entering the protected execution environment. Performing the access control check at this point may represent performing the access control check just in time before there is a chance that context could be lost in the event of an asynchronous exit and/or certain other conditions due to not having a proper place to store the context element. It is to be appreciated that performing the access control check is optional not required. For one thing, in other embodiments, the access control check need not be delayed and may instead be performed as part of the method of FIG. 6. For another thing, some types of protected execution environments may natively not feature such an access control check.

At block 1486, the context metadata may be updated or otherwise changed to indicate that the context element has been read and written. For example, in some embodiments, this may include setting, updating, or otherwise changing a corresponding read indication bit (e.g., R[i]), of a set of read indication bits (e.g., R[]), so that it indicates that the corresponding context element has been read subsequently to entrance into the protected execution environment. Also, in some embodiments, this may include setting, updating, or otherwise changing a corresponding write indication bit (e.g., W[i]), of a set of write indication bits (e.g., W[]), so that it indicates that the corresponding context element has been written after entrance into and during execution within the protected execution environment.

At block 1487, the context element may be restored or otherwise loaded from system memory. For example, a value may be loaded from a context save area in memory into the corresponding register or other context storage location of the processor. At block 1488, the operation may be restarted. The restarted operation may now read the restored context and proceed to advance through block 1482, block 1483, and block 1489 where it may be committed.

FIGs. 12-14 are example embodiments of methods that may be performed. The methods have been described in a basic form in the flow diagrams, but operations may optionally be added to and/or removed from the methods. For example, the optional operations may be removed. In addition, while the flow diagrams show a particular order of operations according to embodiments, that order is exemplary. Alternate embodiments may perform the operations in different order, combine certain operations, overlap certain operations, etc. For example, the order of blocks 1273 and 1274 (or 1486 and 1487) may be swapped, the order of blocks 1272 and 1273 (or 1485 and 1486) may be swapped, or a combination thereof.

In some embodiments, the approaches disclosed herein may optionally be applied to all context of a processor (e.g., irrespective of the amount of such context, how likely it is to be modified during execution within the protected execution environment, etc.). In other embodiments, the approaches disclosed herein may optionally be selectively applied to only a subset of all context of a processor. For example, the approaches disclosed herein may optionally be selectively applied to a subset context having a relatively large amount of data (e.g., vector registers and tile storage), but not to another subset of context having a relatively small amount of data (e.g., an instruction pointer, general-purpose registers). As another example, the approaches disclosed herein may optionally be selectively applied to a subset context having a greater likelihood of not being used (e.g., a widest set of vector registers, tile storage, accelerator context, etc.), but not to another subset of context that will typically always be used (e.g., an instruction pointer, general-purpose registers, etc.). Moreover, an embodiment can use heuristics to determine which context is frequently used by the logical processor in the protected execution environment. When one or more context elements are determined to be used frequently, an embodiment may opt to eagerly restore these context elements instead of restoring them lazily, which would also entail setting the corresponding bits in R[] during the entry into the protected execution environment. Also, in some embodiments, the protected execution environment may have additional control over what context is selectively saved (e.g., control to skip saving some context). For example, SGX and TDX can cause the saving of some context to be skipped.

In order to further illustrate certain concepts, a specific detailed example embodiment of how Intel SGX may be modified to incorporate features of embodiments disclosed herein will now be descried. It is to be appreciated that this is just one specific detailed example embodiment. The scope of the invention, even when implementing features disclosed herein into SGX, is not so limited. Many variations are possible and are contemplated.

Intel SGX is an instruction set architecture (ISA) extension that enables the creation and attestation of secure enclaves, which may represent regions of user code and data that are protected from privileged software. A logical processor may enter an enclave by invoking the EENTER instruction to enter synchronously, or by the ERESUME instruction to enter asynchronously (e.g., to resume execution after an interrupt). The logical processor may exit an enclave by invoking the EEXIT instruction to exit synchronously, or the logical processor may encounter an asynchronous enclave exit (AEX) if it is interrupted, or it encounters an exception. All enabled processor context may be restored and saved by the ERESUME and AEX operations, respectively. The Intel SGX architecture defines a State Save Area (SSA) that is used by each enclave software thread to save/restore processor context when asynchronously exiting/entering the enclave (e.g., during AEX or ERESUME, respectively). The SSA is an example of a context save area.

The EENTER and ERESUME operations may perform enclave page cache map (EPCM) checks on all state save area (SSA) pages that may be used to securely store processor context. The first generation of Intel's Advanced Matrix Extensions (AMX) supports two palettes: in palette 0 the logical processor does not read/write AMX tiles and they will also not be saved/restored by XSAVE/XRSTOR; in palette 1 the logical processor can make full use of all of the tiles and all tiles will be saved/restored. Even if AMX is enabled with palette 0, EENTER and ERESUME may not assume that an enclave thread that begins in palette 0 will not switch to palette 1, and if the thread does switch to palette 1, then AEX will generally save all tiles. Therefore, EENTER and ERESUME may perform additional EPCM checks on the SSA pages that would be used to save the tiles, thus incurring overhead even when the tiles will not be used. Additionally, ERESUME and AEX may also save and restore all the tiles, again, even when the tiles (or only a subset of the tiles) are in use. Such access control checks on the SSA pages may be elided using the approaches disclosed herein.

In some embodiments, a processor may be modified to include a set of read indication bits R[] and a set of write indication bits W[]. Each bit may correspond to a register, tile, or other context element. The ERESUME instruction may be modified to clear R[] and W[]. The EENTER instruction does not restore processor state from the SSA, so it may not clear R[] and W[]. Instead, the EENTER instruction may set all bits in R[] and W[] to prevent processor context from being restored lazily after the logical processor enters via EENTER, and to force all extended processor context to be saved when the logical processor exits via a subsequent AEX. The ERESUME and EENTER instructions may also be modified to elide EPCM checks for SSA pages whose content will only be read and written lazily (for example, the SSA pages used to store AMX state). The EEXIT instruction generally does not save extended processor state to the SSA, so the EEXIT instruction may not need modification. AEX may be modified to selectively save context elements only if W[] indicates they have been written to, and to selectively sanitize context elements when W[] indicates they have been written to or R[] indicates they have been read from. For example, the operational behavior of AEX may be modified to store XSAVE state into the current SSA frame's XSAVE area using the physical addresses that were determined and cached at enclave entry time with CR_XSAVE_PAGE_i. For each XSAVE state i defined by (SECS.ATTRIBUTES.XFRM[i] = 1, destination address cached in CR_XSAVE_PAGE_n)

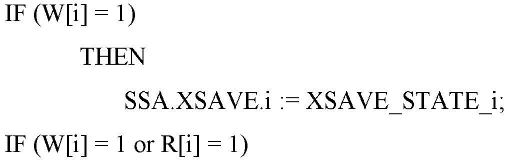

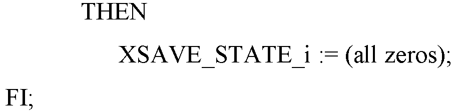

In some embodiments, changes may also be made to the behavior of the commit pipeline stage. When the logical processor is executing in an enclave and a committing operation reads some context, the processor may perform operations similar to those shown for FIG. 12. If the corresponding bits in R[] and W[] are both clear, then the processor may squash the pipeline and load the context element from the SSA frame. For example, it may locate and load the context element by triggering a microcode assist in which the microcode may use an existing control register (e.g., CR_XSAVE_PAGE_n) to identify the base address of the context (XSAVE) region in the logical processor's current SSA frame. The microcode may then, for example, derive the index into the XSAVE region where the context elements saved state is located, and then load that value into the context element of the logical processor. The index derivation function may vary by embodiment, depending on the extended features defined by the processor, etc. When the logical processor is executing in an enclave and a committing operation writes some context element, the processor may set the corresponding bit in W[], similar to what was described for FIG. 13. When the logical processor is executing in an enclave and a committing operation modifies some context element, the processor may perform operations similar to those shown for FIG. 14. For example, a microcode assist may load the context element when neither of the corresponding bits in R[] nor W[] are set.

In some embodiments, in one or more of the scenarios above where an SSA page is to be read or written lazily and EPCM checks have not been performed on that page since the logical processor entered the enclave, the microcode assist may perform the corresponding EPCM checks. This new behavior may have an architectural side effect. Specifically, an instruction that otherwise does not access memory may trigger a fault if one of these EPCM checks fails. Significant OS or platform software changes should not be needed, since the OS (e.g., the SGX driver) may load the missing SSA page without performing introspection on the instruction that triggered the fault.

In some embodiments, Intel SGX may also incorporate another architectural extension. Unlike some other TEEs, SGX allows the SSA to be both software-readable and software-writable. A possible scenario is as follows. The logical processor asynchronously enters the enclave via ERESUME. The modified ERESUME behavior clears R[] and W[] and does not restore the processor's context from the SSA. The logical processor overwrites SSA.XMM1 (e.g., the state-save field for the XMM1 register) with a new value V' which is different than the original value V. The logical processor executes an instruction that moves data from XMM1 to XMM2. When the instruction commits, the processor observes that R[XMM1] and W[XMM1] are both clear, so it squashes the pipeline and loads XMM1 from the SSA, and then re-executes the vector move operation that triggered the squash. After this operation, both XMM1 and XMM2 contain the new value V'. However, the Intel SGX architecture expects them both to contain V because the SSA was modified after ERESUME. In some embodiments, SGX may be modified or extended to allow XSAVE state to be kept in read-only pages. For example, Intel's Control-flow Enforcement Technology (CET) could be used with SGX. A new SSA called the CET SSA could be used that is read-only.

In order to further illustrate certain concepts, a specific detailed example embodiment of how Intel TDX may be modified to incorporate features of embodiments disclosed herein will now be descried. It is to be appreciated that this is just one specific detailed example embodiment. The scope of the invention, even when implementing features disclosed herein into TDX, is not so limited. Many variations are possible and are contemplated.

Intel TDX is an ISA extension that enables the creation and attestation of trust domains (TDs). The TDs may represent virtual machines (VMs) that contain user code and data that are protected from the untrusted Virtual Machine Monitor (VMM) and other VMs. The logical processor may enter a TD through the intermediary Intel TDX Module, which serves as a trusted VMM. The Intel TDX Module executes in a special TDX root Secure-Arbitration Mode (SEAM) of operation. When the untrusted VMM wants the logical processor to enter a TD (e.g., start/resume execution of a TD's virtual CPU, or VCPU), then the untrusted VMM may invoke the SEAMCALL[TDH.VP.ENTER] instruction to enter the Intel TDX Module. This instruction may restore the TD VCPU context and determine whether the TD should be entered synchronously or asynchronously (e.g., to resume execution after an interrupt or an exception). Similarly, the logical processor may exit a TD through the Intel TDX Module. The logical processor may perform a synchronous exit by invoking the TDCALL[TDG.VP.VMCALL] instruction or the logical processor may encounter an asynchronous exit if it is interrupted or encounters an exception. In both cases, the logical processor may pass control from the TD's VCPU to the Intel TDX Module. The Intel TDX Module may save the TD's VCPU context and invoke the SEAMRET instruction to pass control to the untrusted VMM.

The Trust Domain Virtual Processor State (TDVPS) structure is used as a context save area by each VCPU to save/restore the VCPU processor context when exiting/entering the TD. The TDVPS structure resembles the virtual machine control structure (VMCS) structure in the Intel virtual machine extension (VMX) architecture and includes the VCPU architectural context. The VCPU processor context may be saved and restored not only on asynchronous exit/entry of a trust domain but also on synchronous exit/entry.

In some embodiments, a processor may be modified to include a set of read indication bits R[] and a set of write indication bits W[]. Each bit may correspond to a register, tile, or other context element. The TDX module may be modified to clear R[] and W[] when the SEAMCALL [TDH. VP. ENTER] instruction is invoked. Additionally, when returning from a VMCALL, the TDX ABI may expose an option to mask some registers to prevent them from being restored from the TDVPS structure. For each bit that is set in this mask, SEAMCALL [TDH. VP. ENTER] may set the corresponding bits in R[] and W[] to prevent this state from being overwritten, which may in cases violate TDX's expected architectural behavior. VM exits, when encountered in TDX non-root SEAM mode (e.g., when passing control from a TD to the Intel TDX Module) may be modified to selectively save context elements only if the corresponding bit in W[] is set, and to selectively sanitize context elements when the corresponding bits in W[] or R[] are set.

In some embodiments, changes may also be made to the behavior of the commit pipeline stage. The TDVPS structure has a field called XBUFF that contains the XSAVE data for the current VP. TDX's microarchitecture may be augmented with an additional control register to cache the physical address of this XBUFF, which could then be used by microcode to locate the saved value for the accessed context element (e.g., similar to the role played by CR_XSAVE_PAGE_n in the SGX description above). Alternatively, the retirement stage could trigger a VMEXIT after flushing the pipeline. The VMEXIT may transition into SEAM, which could then locate and load the context elements saved state from XBUFF into the context element of the logical processor.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

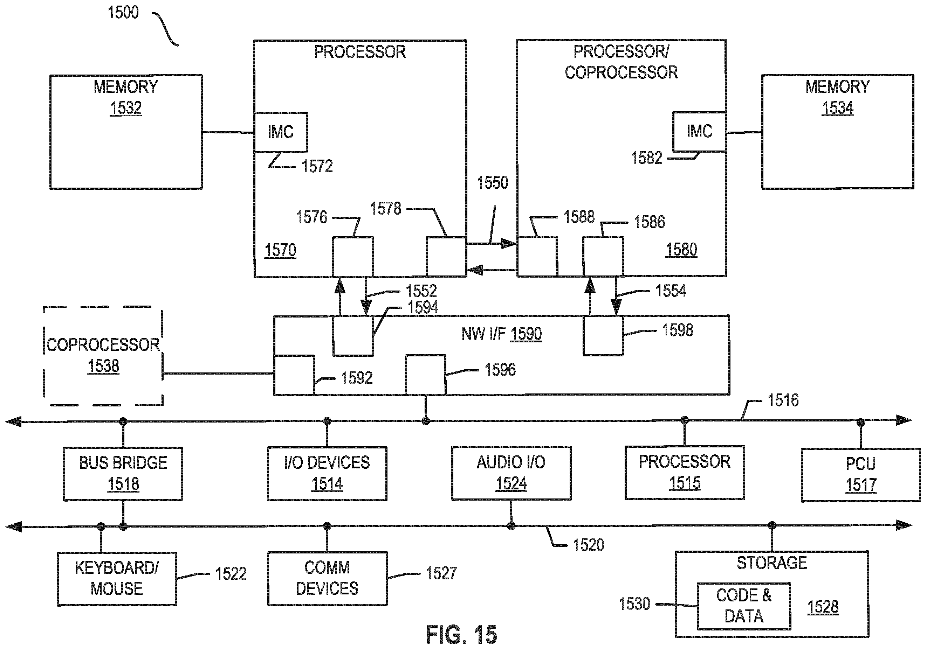

FIG. 15 illustrates an example computing system. Multiprocessor system 1500 is an interfaced system and includes a plurality of processors or cores including a first processor 1570 and a second processor 1580 coupled via an interface 1550 such as a point-to-point (P-P) interconnect, a fabric, and/or bus. In some examples, the first processor 1570 and the second processor 1580 are homogeneous. In some examples, first processor 1570 and the second processor 1580 are heterogenous. Though the example system 1500 is shown to have two processors, the system may have three or more processors, or may be a single processor system. In some examples, the computing system is a system on a chip (SoC).

Processors 1570 and 1580 are shown including integrated memory controller (IMC) circuitry 1572 and 1582, respectively. Processor 1570 also includes interface circuits 1576 and 1578; similarly, second processor 1580 includes interface circuits 1586 and 1588. Processors 1570, 1580 may exchange information via the interface 1550 using interface circuits 1578, 1588. IMCs 1572 and 1582 couple the processors 1570, 1580 to respective memories, namely a memory 1532 and a memory 1534, which may be portions of main memory locally attached to the respective processors.

Processors 1570, 1580 may each exchange information with a network interface (NW I/F) 1590 via individual interfaces 1552, 1554 using interface circuits 1576, 1594, 1586, 1598. The network interface 1590 (e.g., one or more of an interconnect, bus, and/or fabric, and in some examples is a chipset) may optionally exchange information with a coprocessor 1538 via an interface circuit 1592. In some examples, the coprocessor 1538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1570, 1580 or outside of both processors, yet connected with the processors via an interface such as P-P interconnect, such that either or both processors' local cache information may be stored in the shared cache if a processor is placed into a low power mode.

Network interface 1590 may be coupled to a first interface 1516 via interface circuit 1596. In some examples, first interface 1516 may be an interface such as a Peripheral Component Interconnect (PCI) interconnect, a PCI Express interconnect or another I/O interconnect. In some examples, first interface 1516 is coupled to a power control unit (PCU) 1517, which may include circuitry, software, and/or firmware to perform power management operations with regard to the processors 1570, 1580 and/or co-processor 1538. PCU 1517 provides control information to a voltage regulator (not shown) to cause the voltage regulator to generate the appropriate regulated voltage. PCU 1517 also provides control information to control the operating voltage generated. In various examples, PCU 1517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1517 is illustrated as being present as logic separate from the processor 1570 and/or processor 1580. In other cases, PCU 1517 may execute on a given one or more of cores (not shown) of processor 1570 or 1580. In some cases, PCU 1517 may be implemented as a microcontroller (dedicated or general-purpose) or other control logic configured to execute its own dedicated power management code, sometimes referred to as P-code. In yet other examples, power management operations to be performed by PCU 1517 may be implemented externally to a processor, such as by way of a separate power management integrated circuit (PMIC) or another component external to the processor. In yet other examples, power management operations to be performed by PCU 1517 may be implemented within BIOS or other system software.

Various I/O devices 1514 may be coupled to first interface 1516, along with a bus bridge 1518 which couples first interface 1516 to a second interface 1520. In some examples, one or more additional processor(s) 1515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1516. In some examples, second interface 1520 may be a low pin count (LPC) interface. Various devices may be coupled to second interface 1520 including, for example, a keyboard and/or mouse 1522, communication devices 1527 and storage circuitry 1528. Storage circuitry 1528 may be one or more non-transitory machine-readable storage media as described below, such as a disk drive or other mass storage device which may include instructions/code and data 1530 and may implement the storage 'ISAB03 in some examples. Further, an audio I/O 1524 may be coupled to second interface 1520. Note that other architectures than the point-to-point architecture described above are possible. For example, instead of the point-to-point architecture, a system such as multiprocessor system 1500 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

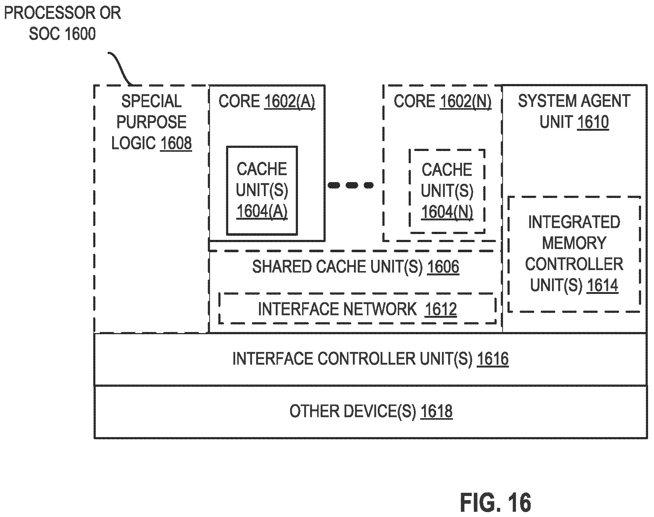

FIG. 16 illustrates a block diagram of an example processor and/or SoC 1600 that may have one or more cores and an integrated memory controller. The solid lined boxes illustrate a processor 1600 with a single core 1602(A), system agent unit circuitry 1610, and a set of one or more interface controller unit(s) circuitry 1616, while the optional addition of the dashed lined boxes illustrates an alternative processor 1600 with multiple cores 1602(A)-(N), a set of one or more integrated memory controller unit(s) circuitry 1614 in the system agent unit circuitry 1610, and special purpose logic 1608, as well as a set of one or more interface controller units circuitry 1616. Note that the processor 1600 may be one of the processors 1570 or 1580, or co-processor 1538 or 1515 of FIG. 15.

Thus, different implementations of the processor 1600 may include: 1) a CPU with the special purpose logic 1608 being integrated graphics and/or scientific (throughput) logic (which may include one or more cores, not shown), and the cores 1602(A)-(N) being one or more general purpose cores (e.g., general purpose in-order cores, general purpose out-of-order cores, or a combination of the two); 2) a coprocessor with the cores 1602(A)-(N) being a large number of special purpose cores intended primarily for graphics and/or scientific (throughput); and 3) a coprocessor with the cores 1602(A)-(N) being a large number of general purpose in-order cores. Thus, the processor 1600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1604(A)-(N) within the cores 1602(A)-(N), a set of one or more shared cache unit(s) circuitry 1606, and external memory (not shown) coupled to the set of integrated memory controller unit(s) circuitry 1614. The set of one or more shared cache unit(s) circuitry 1606 may include one or more mid-level caches, such as level 2 (L2), level 3 (L3), level 4 (L4), or other levels of cache, such as a last level cache (LLC), and/or combinations thereof. While in some examples interface network circuitry 1612 (e.g., a ring interconnect) interfaces the special purpose logic 1608 (e.g., integrated graphics logic), the set of shared cache unit(s) circuitry 1606, and the system agent unit circuitry 1610, alternative examples use any number of well-known techniques for interfacing such units. In some examples, coherency is maintained between one or more of the shared cache unit(s) circuitry 1606 and cores 1602(A)-(N). In some examples, interface controller units circuitry 1616 couple the cores 1602 to one or more other devices 1618 such as one or more I/O devices, storage, one or more communication devices (e.g., wireless networking, wired networking, etc.), etc.

In some examples, one or more of the cores 1602(A)-(N) are capable of multi-threading. The system agent unit circuitry 1610 includes those components coordinating and operating cores 1602(A)-(N). The system agent unit circuitry 1610 may include, for example, power control unit (PCU) circuitry and/or display unit circuitry (not shown). The PCU may be or may include logic and components needed for regulating the power state of the cores 1602(A)-(N) and/or the special purpose logic 1608 (e.g., integrated graphics logic). The display unit circuitry is for driving one or more externally connected displays.

The cores 1602(A)-(N) may be homogenous in terms of instruction set architecture (ISA). Alternatively, the cores 1602(A)-(N) may be heterogeneous in terms of ISA; that is, a subset of the cores 1602(A)-(N) may be capable of executing an ISA, while other cores may be capable of executing only a subset of that ISA or another ISA.

### Example Core Architectures - In-order and out-of-order core block diagram.

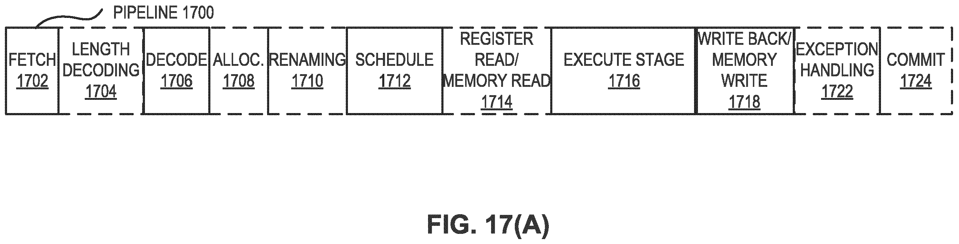

FIG. 17(A) is a block diagram illustrating both an example in-order pipeline and an example register renaming, out-of-order issue/execution pipeline according to examples. FIG. 17(B) is a block diagram illustrating both an example in-order architecture core and an example register renaming, out-of-order issue/execution architecture core to be included in a processor according to examples. The solid lined boxes in FIGS. 17(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 17(A), a processor pipeline 1700 includes a fetch stage 1702, an optional length decoding stage 1704, a decode stage 1706, an optional allocation (Alloc) stage 1708, an optional renaming stage 1710, a schedule (also known as a dispatch or issue) stage 1712, an optional register read/memory read stage 1714, an execute stage 1716, a write back/memory write stage 1718, an optional exception handling stage 1722, and an optional commit stage 1724. One or more operations can be performed in each of these processor pipeline stages. For example, during the fetch stage 1702, one or more instructions are fetched from instruction memory, and during the decode stage 1706, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1706 and the register read/memory read stage 1714 may be combined into one pipeline stage. In one example, during the execute stage 1716, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 17(B) may implement the pipeline 1700 as follows: 1) the instruction fetch circuitry 1738 performs the fetch and length decoding stages 1702 and 1704; 2) the decode circuitry 1740 performs the decode stage 1706; 3) the rename/allocator unit circuitry 1752 performs the allocation stage 1708 and renaming stage 1710; 4) the scheduler(s) circuitry 1756 performs the schedule stage 1712; 5) the physical register file(s) circuitry 1758 and the memory unit circuitry 1770 perform the register read/memory read stage 1714; the execution cluster(s) 1760 perform the execute stage 1716; 6) the memory unit circuitry 1770 and the physical register file(s) circuitry 1758 perform the write back/memory write stage 1718; 7) various circuitry may be involved in the exception handling stage 1722; and 8) the retirement unit circuitry 1754 and the physical register file(s) circuitry 1758 perform the commit stage 1724.

FIG. 17(B) shows a processor core 1790 including front-end unit circuitry 1730 coupled to execution engine unit circuitry 1750, and both are coupled to memory unit circuitry 1770. The core 1790 may be a reduced instruction set architecture computing (RISC) core, a complex instruction set architecture computing (CISC) core, a very long instruction word (VLIW) core, or a hybrid or alternative core type. As yet another option, the core 1790 may be a special-purpose core, such as, for example, a network or communication core, compression engine, coprocessor core, general purpose computing graphics processing unit (GPGPU) core, graphics core, or the like.

The front-end unit circuitry 1730 may include branch prediction circuitry 1732 coupled to instruction cache circuitry 1734, which is coupled to an instruction translation lookaside buffer (TLB) 1736, which is coupled to instruction fetch circuitry 1738, which is coupled to decode circuitry 1740. In one example, the instruction cache circuitry 1734 is included in the memory unit circuitry 1770 rather than the front-end circuitry 1730. The decode circuitry 1740 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1740 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1740 may be implemented using various different mechanisms. Examples of suitable mechanisms include, but are not limited to, look-up tables, hardware implementations, programmable logic arrays (PLAs), microcode read only memories (ROMs), etc. In one example, the core 1790 includes a microcode ROM (not shown) or other medium that stores microcode for certain macroinstructions (e.g., in decode circuitry 1740 or otherwise within the front-end circuitry 1730). In one example, the decode circuitry 1740 includes a micro-operation (micro-op) or operation cache (not shown) to hold/cache decoded operations, micro-tags, or micro-operations generated during the decode or other stages of the processor pipeline 1700. The decode circuitry 1740 may be coupled to rename/allocator unit circuitry 1752 in the execution engine circuitry 1750.

The execution engine circuitry 1750 includes the rename/allocator unit circuitry 1752 coupled to retirement unit circuitry 1754 and a set of one or more scheduler(s) circuitry 1756. The scheduler(s) circuitry 1756 represents any number of different schedulers, including reservations stations, central instruction window, etc. In some examples, the scheduler(s) circuitry 1756 can include arithmetic logic unit (ALU) scheduler/scheduling circuitry, ALU queues, address generation unit (AGU) scheduler/scheduling circuitry, AGU queues, etc. The scheduler(s) circuitry 1756 is coupled to the physical register file(s) circuitry 1758. Each of the physical register file(s) circuitry 1758 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1758 includes vector registers unit circuitry, writemask registers unit circuitry, and scalar register unit circuitry. These register units may provide architectural vector registers, vector mask registers, general-purpose registers, etc. The physical register file(s) circuitry 1758 is coupled to the retirement unit circuitry 1754 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1754 and the physical register file(s) circuitry 1758 are coupled to the execution cluster(s) 1760. The execution cluster(s) 1760 includes a set of one or more execution unit(s) circuitry 1762 and a set of one or more memory access circuitry 1764. The execution unit(s) circuitry 1762 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1756, physical register file(s) circuitry 1758, and execution cluster(s) 1760 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1764). It should also be understood that where separate pipelines are used, one or more of these pipelines may be out-of-order issue/execution and the rest in-order.

In some examples, the execution engine unit circuitry 1750 may perform load store unit (LSU) address/data pipelining to an Advanced Microcontroller Bus (AMB) interface (not shown), and address phase and writeback, data phase load, store, and branches.

The set of memory access circuitry 1764 is coupled to the memory unit circuitry 1770, which includes data TLB circuitry 1772 coupled to data cache circuitry 1774 coupled to level 2 (L2) cache circuitry 1776. In one example, the memory access circuitry 1764 may include load unit circuitry, store address unit circuitry, and store data unit circuitry, each of which is coupled to the data TLB circuitry 1772 in the memory unit circuitry 1770. The instruction cache circuitry 1734 is further coupled to the level 2 (L2) cache circuitry 1776 in the memory unit circuitry 1770. In one example, the instruction cache 1734 and the data cache 1774 are combined into a single instruction and data cache (not shown) in L2 cache circuitry 1776, level 3 (L3) cache circuitry (not shown), and/or main memory. The L2 cache circuitry 1776 is coupled to one or more other levels of cache and eventually to a main memory.

The core 1790 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1790 includes logic to support a packed data instruction set architecture extension (e.g., AVX1, AVX2), thereby allowing the operations used by many multimedia applications to be performed using packed data.

### Example Execution Unit(s) Circuitry.

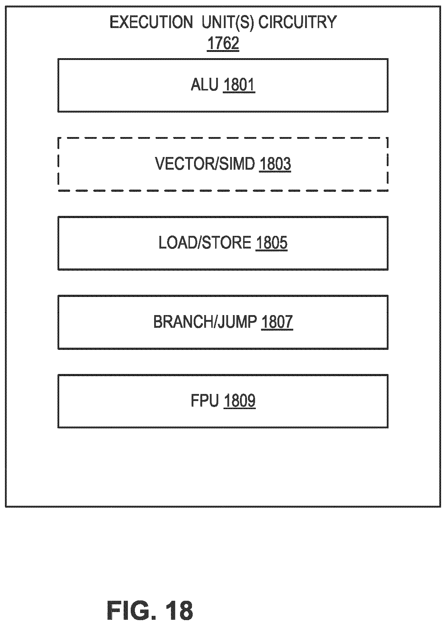

FIG. 18 illustrates examples of execution unit(s) circuitry, such as execution unit(s) circuitry 1762 of FIG. 17(B). As illustrated, execution unit(s) circuity 1762 may include one or more ALU circuits 1801, optional vector/single instruction multiple data (SIMD) circuits 1803, load/store circuits 1805, branch/jump circuits 1807, and/or Floating-point unit (FPU) circuits 1809. ALU circuits 1801 perform integer arithmetic and/or Boolean operations. Vector/SIMD circuits 1803 perform vector/SIMD operations on packed data (such as SIMD/vector registers). Load/store circuits 1805 execute load and store instructions to load data from memory into registers or store from registers to memory. Load/store circuits 1805 may also generate addresses. Branch/jump circuits 1807 cause a branch or jump to a memory address depending on the instruction. FPU circuits 1809 perform floating-point arithmetic. The width of the execution unit(s) circuitry 1762 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

FIG. 19 is a block diagram of a register architecture 1900 according to some examples. As illustrated, the register architecture 1900 includes vector/SIMD registers 1910 that vary from 128-bit to 1,024 bits width. In some examples, the vector/SIMD registers 1910 are physically 512-bits and, depending upon the mapping, only some of the lower bits are used. For example, in some examples, the vector/SIMD registers 1910 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1900 includes writemask/predicate registers 1915. For example, in some examples, there are 8 writemask/predicate registers (sometimes called k0 through k7) that are each 16-bit, 32-bit, 64-bit, or 128-bit in size. Writemask/predicate registers 1915 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1915 corresponds to a data element position of the destination. In other examples, the writemask/predicate registers 1915 are scalable and consists of a set number of enable bits for a given vector element (e.g., 8 enable bits per 64-bit vector element).

The register architecture 1900 includes a plurality of general-purpose registers 1925. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1900 includes scalar floating-point (FP) register file 1945 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1940 (e.g., EFLAGS, RFLAGS, etc.) store status and control information for arithmetic, compare, and system operations. For example, the one or more flag registers 1940 may store condition code information such as carry, parity, auxiliary carry, zero, sign, and overflow. In some examples, the one or more flag registers 1940 are called program status and control registers.

Segment registers 1920 contain segment points for use in accessing memory. In some examples, these registers are referenced by the names CS, DS, SS, ES, FS, and GS.

Machine specific registers (MSRs) 1935 control and report on processor performance. Most MSRs 1935 handle system-related functions and are not accessible to an application program. Machine check registers 1960 consist of control, status, and error reporting MSRs that are used to detect and report on hardware errors.

One or more instruction pointer register(s) 1930 store an instruction pointer value. Control register(s) 1955 (e.g., CR0-CR4) determine the operating mode of a processor (e.g., processor 1570, 1580, 1538, 1515, and/or 1600) and the characteristics of a currently executing task. Debug registers 1950 control and allow for the monitoring of a processor or core's debugging operations.

Memory (mem) management registers 1965 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1900 may, for example, be used in register file / memory 'ISAB08, or physical register file(s) circuitry 17 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

FIG. 20 illustrates examples of an instruction format. As illustrated, an instruction may include multiple components including, but not limited to, one or more fields for: one or more prefixes 2001, an opcode 2003, addressing information 2005 (e.g., register identifiers, memory addressing information, etc.), a displacement value 2007, and/or an immediate value 2009. Note that some instructions utilize some or all the fields of the format whereas others may only use the field for the opcode 2003. In some examples, the order illustrated is the order in which these fields are to be encoded, however, it should be appreciated that in other examples these fields may be encoded in a different order, combined, etc.

The prefix(es) field(s) 2001, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2003 is used to at least partially define the operation to be performed upon a decoding of the instruction. In some examples, a primary opcode encoded in the opcode field 2003 is one, two, or three bytes in length. In other examples, a primary opcode can be a different length. An additional 3-bit opcode field is sometimes encoded in another field.

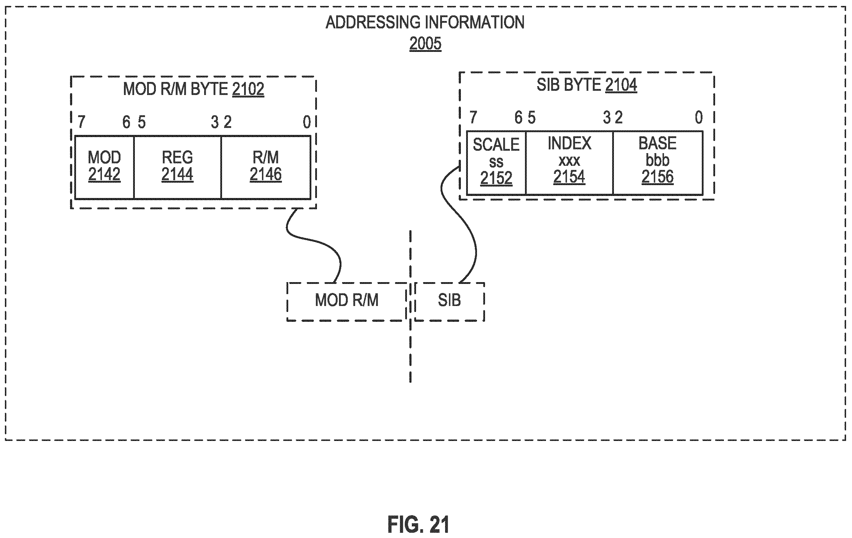

The addressing information field 2005 is used to address one or more operands of the instruction, such as a location in memory or one or more registers. FIG. 21 illustrates examples of the addressing information field 2005. In this illustration, an optional MOD R/M byte 2102 and an optional Scale, Index, Base (SIB) byte 2104 are shown. The MOD R/M byte 2102 and the SIB byte 2104 are used to encode up to two operands of an instruction, each of which is a direct register or effective memory address. Note that both of these fields are optional in that not all instructions include one or more of these fields. The MOD R/M byte 2102 includes a MOD field 2142, a register (reg) field 2144, and R/M field 2146.

The content of the MOD field 2142 distinguishes between memory access and non-memory access modes. In some examples, when the MOD field 2142 has a binary value of 11 (1 1b), a register-direct addressing mode is utilized, and otherwise a register-indirect addressing mode is used.

The register field 2144 may encode either the destination register operand or a source register operand or may encode an opcode extension and not be used to encode any instruction operand. The content of register field 2144, directly or through address generation, specifies the locations of a source or destination operand (either in a register or in memory). In some examples, the register field 2144 is supplemented with an additional bit from a prefix (e.g., prefix 2001) to allow for greater addressing.

The R/M field 2146 may be used to encode an instruction operand that references a memory address or may be used to encode either the destination register operand or a source register operand. Note the R/M field 2146 may be combined with the MOD field 2142 to dictate an addressing mode in some examples.

The SIB byte 2104 includes a scale field 2152, an index field 2154, and a base field 2156 to be used in the generation of an address. The scale field 2152 indicates a scaling factor. The index field 2154 specifies an index register to use. In some examples, the index field 2154 is supplemented with an additional bit from a prefix (e.g., prefix 2001) to allow for greater addressing. The base field 2156 specifies a base register to use. In some examples, the base field 2156 is supplemented with an additional bit from a prefix (e.g., prefix 2001) to allow for greater addressing. In practice, the content of the scale field 2152 allows for the scaling of the content of the index field 2154 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2007 provides this value. Additionally, in some examples, a displacement factor usage is encoded in the MOD field of the addressing information field 2005 that indicates a compressed displacement scheme for which a displacement value is calculated and stored in the displacement field 2007.

In some examples, the immediate value field 2009 specifies an immediate value for the instruction. An immediate value may be encoded as a 1-byte value, a 2-byte value, a 4-byte value, etc.

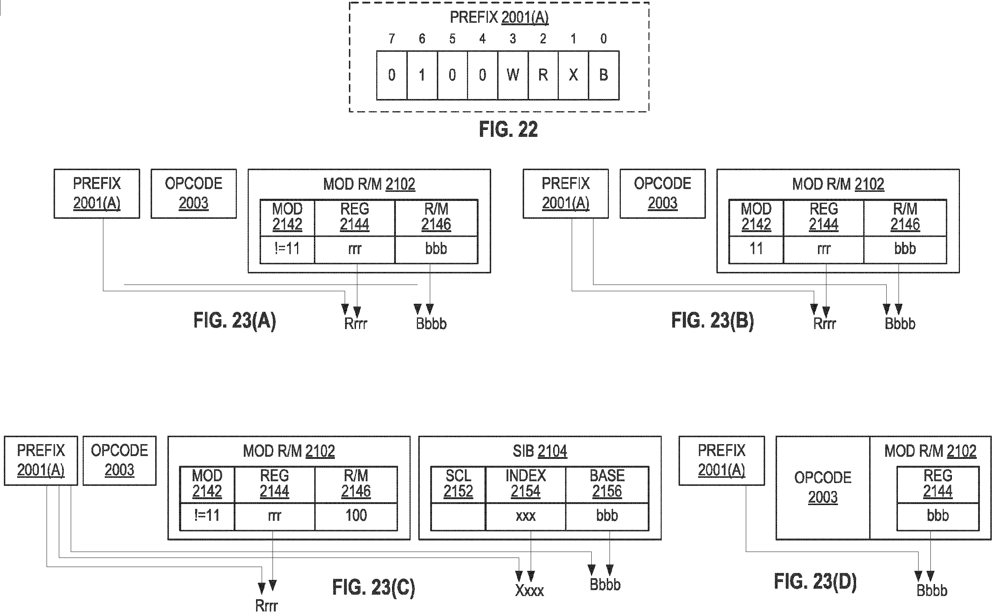

FIG. 22 illustrates examples of a first prefix 2001(A). In some examples, the first prefix 2001(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2001(A) may specify up to three registers using 3-bit fields depending on the format: 1) using the reg field 2144 and the R/M field 2146 of the MOD R/M byte 2102; 2) using the MOD R/M byte 2102 with the SIB byte 2104 including using the reg field 2144 and the base field 2156 and index field 2154; or 3) using the register field of an opcode.

In the first prefix 2001(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 2144 and MOD R/M R/M field 2146 alone can each only address 8 registers.

In the first prefix 2001(A), bit position 2 (R) may be an extension of the MOD R/M reg field 2144 and may be used to modify the MOD R/M reg field 2144 when that field encodes a general-purpose register, a 64-bit packed data register (e.g., a SSE register), or a control or debug register. R is ignored when MOD R/M byte 2102 specifies other registers or defines an extended opcode.

### Bit position 1 (X) may modify the SIB byte index field 2154.

Bit position 0 (B) may modify the base in the MOD R/M R/M field 2146 or the SIB byte base field 2156; or it may modify the opcode register field used for accessing general purpose registers (e.g., general purpose registers 1925).

FIGS. 23(A)-(D) illustrate examples of how the R, X, and B fields of the first prefix 2001(A) are used. FIG. 23(A) illustrates R and B from the first prefix 2001(A) being used to extend the reg field 2144 and R/M field 2146 of the MOD R/M byte 2102 when the SIB byte 21 04 is not used for memory addressing. FIG. 23(B) illustrates R and B from the first prefix 2001(A) being used to extend the reg field 2144 and R/M field 2146 of the MOD R/M byte 2102 when the SIB byte 21 04 is not used (register-register addressing). FIG. 23(C) illustrates R, X, and B from the first prefix 2001(A) being used to extend the reg field 2144 of the MOD R/M byte 2102 and the index field 2154 and base field 2156 when the SIB byte 21 04 being used for memory addressing. FIG. 23(D) illustrates B from the first prefix 2001(A) being used to extend the reg field 2144 of the MOD R/M byte 2102 when a register is encoded in the opcode 2003.

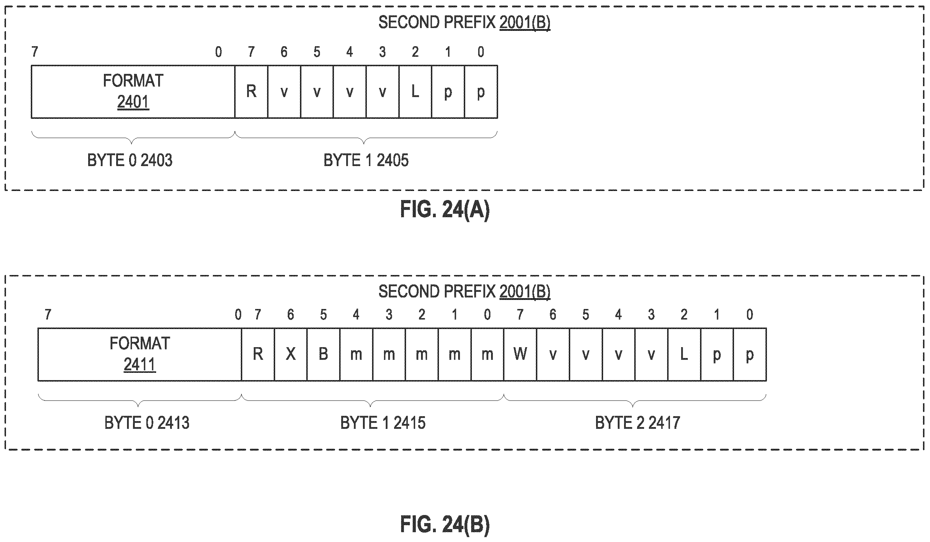

FIGS. 24(A)-(B) illustrate examples of a second prefix 2001(B). In some examples, the second prefix 2001(B) is an example of a VEX prefix. The second prefix 2001(B) encoding allows instructions to have more than two operands, and allows SIMD vector registers (e.g., vector/SIMD registers 1910) to be longer than 64-bits (e.g., 128-bit and 256-bit). The use of the second prefix 2001(B) provides for three-operand (or more) syntax. For example, previous two-operand instructions performed operations such as A = A + B, which overwrites a source operand. The use of the second prefix 2001(B) enables operands to perform nondestructive operations such as A = B + C.

In some examples, the second prefix 2001(B) comes in two forms - a two-byte form and a three-byte form. The two-byte second prefix 2001(B) is used mainly for 128-bit, scalar, and some 256-bit instructions; while the three-byte second prefix 2001(B) provides a compact replacement of the first prefix 2001(A) and 3-byte opcode instructions.

FIG. 24(A) illustrates examples of a two-byte form of the second prefix 2001(B). In one example, a format field 2401 (byte 0 2403) contains the value C5H. In one example, byte 1 2405 includes an "R" value in bit[7]. This value is the complement of the "R" value of the first prefix 2001(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2146 to encode the instruction operand that references a memory address or encode either the destination register operand or a source register operand.

Instructions that use this prefix may use the MOD R/M reg field 2144 to encode either the destination register operand or a source register operand, or to be treated as an opcode extension and not used to encode any instruction operand.

For instruction syntax that support four operands, vvvv, the MOD R/M R/M field 2146 and the MOD R/M reg field 2144 encode three of the four operands. Bits[7:4] of the immediate value field 2009 are then used to encode the third source register operand.

FIG. 24(B) illustrates examples of a three-byte form of the second prefix 2001(B). In one example, a format field 2411 (byte 0 2413) contains the value C4H. Byte 1 2415 includes in bits[7:5] "R," "X," and "B" which are the complements of the same values of the first prefix 2001(A). Bits[4:0] of byte 1 2415 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2417 is used similar to W of the first prefix 2001(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2146 to encode the instruction operand that references a memory address or encode either the destination register operand or a source register operand.

Instructions that use this prefix may use the MOD R/M reg field 2144 to encode either the destination register operand or a source register operand, or to be treated as an opcode extension and not used to encode any instruction operand.

For instruction syntax that support four operands, vvvv, the MOD R/M R/M field 2146, and the MOD R/M reg field 2144 encode three of the four operands. Bits[7:4] of the immediate value field 2009 are then used to encode the third source register operand.

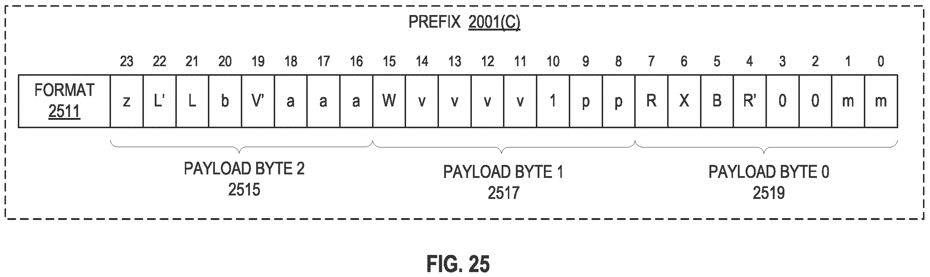

FIG. 25 illustrates examples of a third prefix 2001(C). In some examples, the third prefix 2001(C) is an example of an EVEX prefix. The third prefix 2001(C) is a four-byte prefix.

The third prefix 2001(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 19) or predication utilize this prefix. Opmask register allow for conditional processing or selection control. Opmask instructions, whose source/destination operands are opmask registers and treat the content of an opmask register as a single value, are encoded using the second prefix 2001(B).

The third prefix 2001(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2001(C) is a format field 2511 that has a value, in one example, of 62H. Subsequent bytes are referred to as payload bytes 2515-2519 and collectively form a 24-bit value of P[23:0] providing specific capability in the form of one or more fields (detailed herein).

In some examples, P[1:0] of payload byte 2519 are identical to the low two mm bits. P[3:2] are reserved in some examples. Bit P[4] (R') allows access to the high 16 vector register set when combined with P[7] and the MOD R/M reg field 2144. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2144 and MOD R/M R/M field 2146. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 2001(A) and second prefix 2011(B) and may serve as an opcode extension bit or operand size promotion.

P[18:16] specify the index of a register in the opmask (writemask) registers (e.g., writemask/predicate registers 1915). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 2001(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

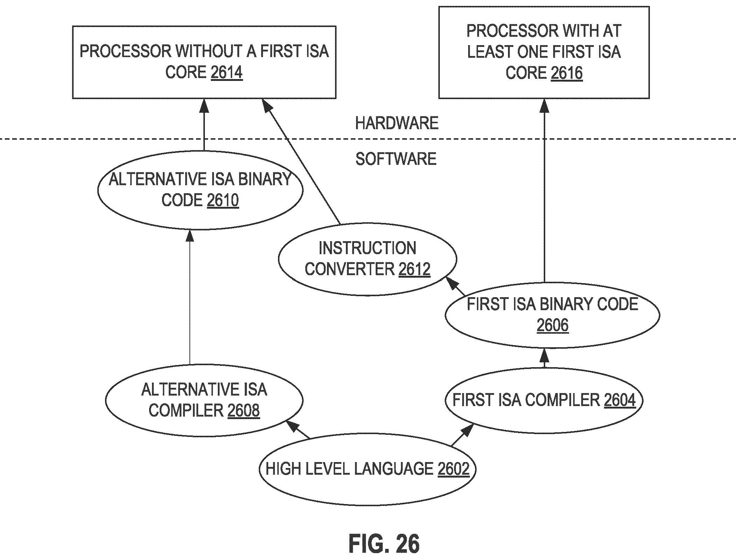

FIG. 26 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 26 shows a program in a high-level language 2602 may be compiled using a first ISA compiler 2604 to generate first ISA binary code 2606 that may be natively executed by a processor with at least one first ISA core 2616. The processor with at least one first ISA core 2616 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2604 represents a compiler that is operable to generate first ISA binary code 2606 (e.g., object code) that can, with or without additional linkage processing, be executed on the processor with at least one first ISA core 2616. Similarly, FIG. 26 shows the program in the high-level language 2602 may be compiled using an alternative ISA compiler 2608 to generate alternative ISA binary code 2610 that may be natively executed by a processor without a first ISA core 2614. The instruction converter 2612 is used to convert the first ISA binary code 2606 into code that may be natively executed by the processor without a first ISA core 2614. This converted code is not necessarily to be the same as the alternative ISA binary code 2610; however, the converted code will accomplish the general operation and be made up of instructions from the alternative ISA. Thus, the instruction converter 2612 represents software, firmware, hardware, or a combination thereof that, through emulation, simulation or any other process, allows a processor or other electronic device that does not have a first ISA processor or core to execute the first ISA binary code 2606.

Components, features, and details described for any of the processors disclosed herein may optionally apply to any of the methods disclosed herein, which in embodiments may optionally be performed by and/or with such processors. Any of the processors described herein in embodiments may optionally be included in any of the systems disclosed herein. Any of the processors disclosed herein may optionally have any of the microarchitectures shown herein. Any of the instructions disclosed herein may optionally be performed by any of the processors disclosed herein. In addition, any of the instructions disclosed herein may in some embodiments optionally have any of the features or details of the instruction formats shown herein.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have be used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but yet still co-operate or interact with each other. For example, an execution unit may be coupled with context unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth in order to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail in order to avoid obscuring the understanding of the description.

### EXAMPLE EMBODIMENTS

The following examples pertain to further embodiments. Specifics in the examples may be used anywhere in one or more embodiments.

Example 1 is an apparatus including a context storage to store context of a logical processor, and an execution unit coupled with the context storage. The execution unit to perform operations corresponding to a control primitive or in response to an exceptional condition. The operations including to selectively save a first subset of the context, from a first subset of the context storage written to after entrance into a protected execution environment, to system memory. The operations also include to cause the logical processor to exit the protected execution environment.

Example 2 includes the apparatus of Example 1, where the execution unit, to perform the operations corresponding to the control primitive, is to determine not to save a second subset of the context, from a second subset of the context storage not written to after the entrance into the protected execution environment, to the system memory.

Example 3 includes the apparatus of any one of Examples 1 to 2, where the execution unit, to selectively save the first subset of the context, is to selectively save only the first subset of the context, from only the first subset of the context storage, optionally to a context save area in the system memory.

Example 4 includes the apparatus of any one of Examples 1 to 3, where the execution unit, to perform the operations corresponding to the control primitive, is to selectively sanitize a second subset of the context storage read from, written to, or both read from and written to after the entrance into the protected execution environment.

Example 5 includes the apparatus of Example 4, where the execution unit, to selectively sanitize the second subset of the context storage, is to perform at least one operation selected from a group consisting of: (1) erase context in the second subset of the context storage; (2) overwrite the context in the second subset of the context storage; (3) obfuscate the context in the second subset of the context storage; (4) compromise the context in the second subset of the context storage; and (5) reset the second subset of the context storage.

Example 6 includes the apparatus of any one of Examples 1 to 5, where the execution unit, to perform the operations corresponding to the control primitive, is to determine not to sanitize a subset of the context storage not read from or written to after the entrance into the protected execution environment.

Example 7 includes the apparatus of any one of Examples 1 to 6, where the execution unit, to perform the operations corresponding to the control primitive, is to determine that a context element of the first subset of the context storage has been written to after the entrance into the protected execution environment by determining that a context element metadata corresponding to the context element indicates the context element has been written to.

Example 8 includes the apparatus of any one of Examples 1 to 7, optionally where the context element includes a register of the logical processor, and optionally where the context element metadata includes a write indication bit of a set of write indication bits that each correspond to different context elements of the logical processor.

Example 9 includes the apparatus of any one of Examples 1 to 8, where the logical processor includes a decode unit to decode a context access instruction, and circuitry coupled with the decode unit to perform operations corresponding to the context access instruction. The operations include to determine that a context element of the context storage has not been either read from or written to after the entrance into the protected execution environment, and to load context from a context save area of the system memory into the context element of the context storage.

Example 10 includes the apparatus of any one of Examples 1 to 9, where the logical processor includes a decode unit to decode a context access instruction, and circuitry coupled with the decode unit to perform operations corresponding to the context access instruction. The operations include to perform an access control check for a page that is to be used to store context to be accessed by the context access instruction.

Example 11 includes the apparatus of any one of Examples 1 to 10, where the logical processor includes an execution unit to perform operations corresponding to a second control primitive including to change context metadata corresponding to context elements of the context storage to indicate that the context elements have not been read from and have not been written to, and cause the logical processor to enter the protected execution environment.

Example 12 includes the apparatus of any one of Examples 1 to 11, where the control primitive is one of: (1) an instruction of an instruction set of a processor, where the apparatus further includes decode unit coupled with the execution unit, the decode unit to decode the instruction; or (2) a command to be stored in a location selected from a group consisting of a control register and a memory-mapped input/output (MMIO) region.

Example 13 is a method including storing context of a logical processor in a context storage, and performing operations corresponding to a control primitive or an exceptional condition. The operations including selectively saving a first subset of the context, from a first subset of the context storage that has been written to after entering into a protected execution environment, to system memory, and causing the logical processor to exit the protected execution environment.

Example 14 includes the method of Example 13, where the operations include determining not to save a second subset of the context, from a second subset of the context storage not written to after entering into the protected execution environment, to the system memory.

Example 15 includes the method of any one of Examples 13 to 14, where the operations include selectively sanitizing a second subset of the context storage read from, written to, or both read from and written to after entering into the protected execution environment.

Example 16 includes the method of Example 15, where sanitizing the second subset of the context storage includes at least one operation selected from a group consisting of: (1) erasing context in the second subset of the context storage; (2) overwriting the context in the second subset of the context storage; (3) obfuscating the context in the second subset of the context storage; (4) compromising the context in the second subset of the context storage; and (5) resetting the second subset of the context storage.

Example 17 includes the method of any one of Examples 13 to 16, where the operations include determining not to sanitize a subset of the context storage not read from or written to after said entering into the protected execution environment.

Example 18 is a non-transitory machine-readable storage medium, the non-transitory machine-readable storage medium storing instructions that if executed by a machine are to cause the machine to perform operations corresponding to a control primitive or an exceptional condition. The operations including to store context of a logical processor in a context storage, and perform operations corresponding to a control primitive. The operations include to selectively save a first subset of the context, from a first subset of the context storage written to after entrance into a protected execution environment, to system memory, and cause the logical processor to exit the protected execution environment.

Example 19 includes the non-transitory machine-readable storage medium of Example 18, where the operations include to determine not to save a second subset of the context, from a second subset of the context storage not written to after the entrance into the protected execution environment, to the system memory.

Example 20 includes the non-transitory machine-readable storage medium of any one of Examples 18 to 19, where the operations include to selectively sanitize a subset of the context storage read from, written to, or both read from and written to after the entrance into the protected execution environment.

Example 21 is an apparatus including means for performing the method of any of Examples 13 to 17.

Example 22 is an apparatus including circuitry to perform the method of any of Examples 13 to 17.

## Claims

1. An apparatus comprising:
a context storage to store context of a logical processor; and
an execution unit coupled with the context storage, the execution unit to perform operations corresponding to a control primitive or in response to an exceptional condition, the operations including to:
selectively save a first subset of the context, from a first subset of the context storage written to after entrance into a protected execution environment, to system memory; and
cause the logical processor to exit the protected execution environment.

2. The apparatus of claim 1, wherein the execution unit, to perform the operations, is to determine not to save a second subset of the context, from a second subset of the context storage not written to after the entrance into the protected execution environment, to the system memory.

3. The apparatus of any one of claims 1 to 2, wherein the execution unit, to selectively save the first subset of the context, is to selectively save only the first subset of the context, from only the first subset of the context storage, to a context save area in the system memory.

4. The apparatus of any one of claims 1 to 3, wherein the execution unit, to perform the operations, is to selectively sanitize a second subset of the context storage read from, written to, or both read from and written to after the entrance into the protected execution environment.

5. The apparatus of claim 4, wherein the execution unit, to selectively sanitize the second subset of the context storage, is to perform at least one operation selected from a group consisting of:
erase context in the second subset of the context storage;
overwrite the context in the second subset of the context storage;
obfuscate the context in the second subset of the context storage;
compromise the context in the second subset of the context storage; and
reset the second subset of the context storage.

6. The apparatus of any one of claims 4 to 5, wherein the execution unit, to perform the operations, is to determine not to sanitize a subset of the context storage not read from or written to after the entrance into the protected execution environment.

7. The apparatus of any one of claims 1 to 6, wherein the execution unit, to perform the operations, is to determine that a context element of the first subset of the context storage has been written to after the entrance into the protected execution environment by determining that a context element metadata corresponding to the context element indicates the context element has been written to.

8. The apparatus of claim 7, wherein the context element comprises a register of the logical processor, and wherein the context element metadata comprises a write indication bit of a set of write indication bits that each correspond to different context elements of the logical processor.

9. The apparatus of any one of claims 1 to 8, wherein the logical processor comprises:
a decode unit to decode a context access instruction; and
circuitry coupled with the decode unit to perform operations corresponding to the context access instruction, including to:
determine that a context element of the context storage has not been either read from or written to after the entrance into the protected execution environment; and
load context from a context save area of the system memory into the context element of the context storage.

10. A method comprising:
storing context of a logical processor in a context storage; and
performing operations corresponding to a control primitive or an exceptional condition, including:
selectively saving a first subset of the context, from a first subset of the context storage that has been written to after entering into a protected execution environment, to system memory; and
causing the logical processor to exit the protected execution environment.

11. The method of claim 10, wherein the operations include determining not to save a second subset of the context, from a second subset of the context storage not written to after entering into the protected execution environment, to the system memory.

12. The method of any one of claims 10 to 11, wherein the operations include selectively sanitizing a second subset of the context storage read from, written to, or both read from and written to after entering into the protected execution environment.

13. The method of claim 12, wherein sanitizing the second subset of the context storage includes at least one operation selected from a group consisting of:
erasing context in the second subset of the context storage;
overwriting the context in the second subset of the context storage;
obfuscating the context in the second subset of the context storage;
compromising the context in the second subset of the context storage; and
resetting the second subset of the context storage.

14. The method of any one of claims 10 to 13, wherein the operations include determining not to sanitize a subset of the context storage not read from or written to after said entering into the protected execution environment.

15. Machine-readable storage including machine-readable instructions, which when executed, cause a computer to implement a method as claimed in any one of claims 10 to 14.
